(19) Europäisches Patentamt
European Patent Office
Office européen des brevets

(11) EP 1 776 010 B1

(12) EUROPÄISCHE PATENTSCHRIFT

(45) Veröffentlichungstag und Bekanntmachung des Hinweises auf die Patenterteilung:
**26.12.2007 Patentblatt 2007/52**

(21) Anmeldenummer: **05770777.0**

(22) Anmeldetag: **03.08.2005**

(51) Int Cl.:
***A01N 25/04*** (2006.01) ***A01N 25/28*** (2006.01)
***A01N 25/26*** (2006.01) ***A01N 43/653*** (2006.01)
***A01N 43/36*** (2006.01) ***A01N 53/00*** (2006.01)
***B27K 5/00*** (2006.01)

(86) Internationale Anmeldenummer:
**PCT/EP2005/008430**

(87) Internationale Veröffentlichungsnummer:
**WO 2006/015791 (16.02.2006 Gazette 2006/07)**

# (54) VERFAHREN ZUR HERSTELLUNG WÄSSRIGER WIRKSTOFFZUSAMMENSETZUNGEN VON IN WASSER SCHWER LÖSLICHEN WIRKSTOFFEN

METHOD FOR PRODUCING AQUEOUS ACTIVE SUBSTANCE COMPOSITIONS OF ACTIVE SUBSTANCES THAT ARE HARDLY SOLUBLE IN WATER

PROCEDE DE PRODUCTION DE COMPOSITIONS AQUEUSES DE PRINCIPES ACTIFS DIFFICILEMENT SOLUBLES DANS L'EAU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2004 DE 102004037850**

(43) Veröffentlichungstag der Anmeldung:
**25.04.2007 Patentblatt 2007/17**

(73) Patentinhaber: **BASF AKTIENGESELLSCHAFT**
**67056 Ludwigshafen (DE)**

(72) Erfinder:
- **AMRHEIN, Patrick**
  **65239 Hochheim (DE)**
- **SCHÖPKE, Holger**
  **69151 Neckargemünd (DE)**
- **KLEIST, Gunnar**
  **76534 Baden-Baden (DE)**
- **KLUGE, Michael**
  **67547 Worms (DE)**

(74) Vertreter: **Reitstötter - Kinzebach**
**Ludwigsplatz 4**
**67059 Ludwigshafen (DE)**

(56) Entgegenhaltungen:
**EP-A- 1 230 855** **WO-A-00/62612**
**GB-A- 831 790** **US-A- 3 400 093**

- **DATABASE WPI Section Ch, Week 200455 Derwent Publications Ltd., London, GB; Class A14, AN 2004-562832 XP002369461 & CN 1 491 541 A (UNIV HEBEI SCI & TECHNOLOGY) 28. April 2004 (2004-04-28)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung wässriger Wirkstoffzusammensetzungen von in Wasser schwer löslichen Wirkstoffen, insbesondere von Wirkstoffen für den Pflanzen- und Materialschutz. Die Erfindung betrifft außerdem die nach dem Verfahren erhältlichen Wirkstoffzusammensetzungen und ihre Verwendung zur Bekämpfungen von Schadorganismen im Pflanzen und Materialschutz.

Wirkstoffe für den Pflanzenschutz und für den Materialschutz, d. h. Substanzen, die auch in geringer Konzentration bereits eine physiologische Wirkung in der Pflanze oder einem Schadorganismus entfalten können, beispielsweise Insektizide, Fungizide und Herbizide, aber auch Wachstumsregulatoren, werden häufig in Form wässriger Wirkstoffzubereitungen formuliert und angewendet. Häufig handelt es sich bei derartigen Formulierungen um wässrige Konzentrate, welche vor ihrer Anwendung durch Zugabe einer großen Menge Wasser auf die gewünschte Anwendungskonzentration verdünnt werden (so genannte "Spritzbrühe").

Ein prinzipielles Problem bei wässrigen Wirkstoffzubereitungen ist die in der Regel geringe Wasserlöslichkeit der Wirkstoffe, die häufig weniger als 5 g/l bei 23 °C/1013 mbar beträgt. Wässrige Formulierungen derartiger Wirkstoffe sind daher heterogene Systeme, wobei der Wirkstoff als emulgierte bzw. dispergierte Phase in einer kontinuierlichen wässrigen Phase vorliegt. Zur Stabilisierung dieser an sich metastabilen Systeme werden üblicherweise Emulgatoren oder Dispergierhilfsmittel eingesetzt. Deren stabilisierende Wirkung ist jedoch häufig nicht zufriedenstellend, so dass eine Abscheidung des Wirkstoffs, beispielsweise ein Aufrahmen oder ein Sedimentieren des Wirkstoffs, auftreten kann, insbesondere, wenn die wässrige Formulierung längere Zeit bei erhöhter Temperatur und/oder bei stark wechselnden Temperaturen oder in der Nähe des Gefrierpunkts gelagert wird. Dieses Problem ist insbesondere dann ausgeprägt, wenn der Wirkstoff zur Kristallisation neigt.

Häufig werden auch organische Lösungsmittel zur Herstellung wässriger Formulierungen von in Wasser nicht löslichen Wirkstoffen eingesetzt. So verwendet man häufig mit Wasser mischbare Lösungsmittel als Löslichkeitsvermittler, d.h. zur Erhöhung der Löslichkeit des Wirkstoffs in der wässrigen Phase. Mit Wasser nicht mischbare Lösungsmittel wiederum dienen dazu, einen bei Anwendungstemperatur festen Wirkstoff in eine flüssige Phase zu überführen, die man dann emulgieren kann. Im Unterschied zum festen Wirkstoff ist der Wirkstoff über das Lösemittel in der Emulsion molekular gelöst und bei Applikation besser verfügbar und wirksamer. Der Einsatz organischer Lösungsmittel ist jedoch auf Grund der bekannten VOC-Problematik aus arbeitshygienischen Gründen, Umweltaspekten und teilweise auch aus toxikologischen Gründen nicht wünschenswert.

Ein weiterer Nachteil konventioneller wässriger Wirkstoffaufbereitungen ist die vergleichsweise große Teilchengröße der in der wässrigen Phase suspendierten bzw. emulgierten Wirkstoffpartikel bzw. Wirkstofftröpfchen, die in der Regel mehrere μm beträgt. Wünschenswert sind jedoch wässrige Formulierungen, in denen der Wirkstoff in möglichst feinverteilter Form vorliegt, um einerseits eine gleichmäßige Verteilung in der Formulierung und damit eine bessere Handhabbarkeit und Dosierbarkeit zu gewährleisten und gleichzeitig um die Bioverfügbarkeit des Wirkstoffs in der Formulierung zu erhöhen. Erstrebenswert sind dabei Formulierungen, in denen die heterogene wirkstoffhaltige Phase mittlere Teilchengrößen unterhalb 1500 nm, vorzugsweise unterhalb 1000 nm, insbesondere unterhalb 600 nm und speziell unterhalb 300 nm aufweist.

Verschiedentlich wurde vorgeschlagen, wasserunlösliche Wirkstoffe in Form wässriger Mikro- bzw. Nanoemulsionen zu formulieren (siehe z. B. WO 02/082900, WO 02/45507 und WO 99/65301). Im Gegensatz zu konventionellen, üblicherweise milchig-trüben Makroemulsionen/suspensionen, in denen die dispergierte Phase Teilchengrößen deutlich oberhalb 1 μm aufweist, liegen die Wirkstoffe in den klaren bis opaken Mikro-bzw. Nanoemulsionen in feinverteilter Form mit Teilchengrößen deutlich unterhalb : 1000 nm bis hin zu 10 nm oder darunter vor [siehe hierzu D.J. Shaw, Introduction to Colloid and Surface Chemistry, Butterworths, London 1986, S.273]. Allerdings benötigt man zur Herstellung derartiger Mikro- bzw. Nanoemulsionen vergleichsweise große Mengen an Emulgator und an organischen Lösungsmitteln. Der hohe Anteil an Emulgatoren ist jedoch nicht nur ein Kostenfaktor sondern kann auch zu Problemen bei der Anwendung der Formulierungen führen. Lösungsmittel wiederum sind aus arbeitshygienischen Gründen und Kostengründen unerwünscht. Ein weiteres Problem derartiger Mikroemulsionen ist ihre Instabilität gegenüber Entmischung.

Weiterhin wurden verschiedentlich wässrige Polymer/Wirkstoffzubereitungen beschrieben, die durch radikalische, wässrige Emulsionspolymerisation einer Monomeremulsion erhalten werden, worin der Wirkstoff in den Monomertröpfchen der zu polymerisierenden Monomeremulsion vorliegt (siehe US 3,400,093 und FR 1598644). Dieses Verfahren ist jedoch auf solche Wirkstoffe beschränkt, die in den Monomeren gut löslich sind. In der Regel handelt es sich um Substanzen, die bei Raumtemperatur flüssig sind.

EP-A-1 230 855 beschreibt in Wasser suspendierbare Wirkstoff enthaltende doppelwandige Polymerpartikel, die eine Größe von 10-1000 nm aufweisen, sowie Verfahren zu ihrer Herstellung, dadurch gekennzeichnet, daß in einem ersten Schritt (Meth)Acrylsäureestermonomere, polyfunktionelle (Meth)Acrylsäureester-monomere, der im Monomer gelöste Wirkstoff, eine oberflächenaktive Substanz und optionale hydrophile Monomere in Wasser emulgiert werden und danach eine Emulsionspolymerisation durchgeführt wird. In einem zweiten Schritt werden ein (Meth)Acrylsäureestermonomer und ein polyfunktioneller (Meth)Acrylsäureestermonomer zugefügt und auf den Polymerpartikeln des ersten Schrittes polymerisiert.

GB-A-831 790 beschreibt in Wasser suspendierbare Pestizidhaltige Polymerpartikel, die durch Emulsionspolymerisation von ethylenisch ungesättigten Monomeren hergestellt werden, wobei die Monomeren den Wirkstoff in gelöster Form enthalten.

WO-A-0062612 beschreibt in Wasser suspendierbare Pestizidformulierungen, die dadurch hergestellt werden, daß feste Pestizidpartikel mit Melamin-Formaldehydharzen beschichtet werden und die Harze danach einer Kondensations-Polymerisation unterworfen werden.

Der vorliegenden Erfindung liegt daher die Aufgabe zu Grunde, wässrige Zubereitungen von in Wasser unlöslichen bzw. schwerlöslichen Wirkstoffen, insbesondere von Wirkstoffen für den Pflanzenschutz oder für den Materialschutz bereitzustellen. Diese

Wirkstoffzusammensetzungen sollten leicht herstellbar sein und auch ohne oder nur mit einen sehr geringen Gehalt an flüchtigen organischen Substanzen formulierbar sein. Weiterhin ist eine hohe Stabilität der wässrigen Wirkstoffzusammensetzungen im Hinblick auf Entmischungsvorgänge bei langer Lagerung und beim Verdünnen mit Wasser wünschenswert.

Diese Aufgabe wird durch ein Verfahren gelöst, das die folgenden Schritte umfasst:

a) Bereitstellung einer wässrigen Suspension von festen Wirkstoffpartikeln wenigstens eines Wirkstoffs mit einer Wasserlöslichkeit von nicht mehr als 5 g/l bei 25 °C/1013 mbar, enthaltend zur Stabilisierung der Wirkstoffpartikel wenigstens eine oberflächenaktive Substanz, wobei die Wirkstoffpartikel in der Suspension eine mittlere Teilchengröße, bestimmt durch dynamische Lichtstreuung, von nicht mehr als 1200 nm, aufweisen,

b) Emulsionspolymerisation einer ersten Monomerzusammensetzung M1 in der wässrigen Suspension des Wirkstoffs, wobei die Monomerzusammensetzung M1. wenigstens 95 Gew.-%, bezogen auf ihr Gesamtgewicht, wenigstens eines neutralen, monoethylenisch ungesättigten Monomeren M1.1 mit einer Wasserlöslichkeit von nicht mehr als 30 g/l bei 25°C/1013 mbar umfasst, wobei man eine wässrige Dispersion von Polymer-Wirkstoff-Partikeln erhält, und

c) Emulsionspolymerisation einer zweiten Monomerzusammensetzung M2 in einer wässrigen Dispersion der in Schritt b) erhaltenen Polymer-Wirkstoffpartikel, wobei die Monomerzusammensetzung M2 wenigstens 60 Gew.-%, bezogen auf ihr Gesamtgewicht, wenigstens eines neutralen, monoethylenisch ungesättigten Monomeren M2.1 mit einer Wasserlöslichkeit von nicht mehr als 30 g/l bei 25°C/1013 mbar umfasst.

Die vorliegende Erfindung betrifft daher das hier beschriebene Verfahren sowie die nach dem Verfahren erhältlichen wässrigen Wirkstoffzusammensetzungen.

Die nach dem erfindungsgemäßen Verfahren erhaltenen wässrigen Wirkstoffzusammensetzungen enthalten den Wirkstoff in Form feinteiliger, suspendierter Polymer-Wirkstoffpartikel, wobei die Polymer-Wirkstoffpartikel in der Regel mittlere Teilchendurchmesser unterhalb 1200 nm, häufig unterhalb 1000 nm, insbesondere unterhalb 600 nm und speziell unterhalb 300 nm, z.B. im Bereich von 10 bis 300 nm vorzugsweise im Bereich von 20 bis 250 nm und speziell im Bereich von 30 bis 200 nm aufweisen. Die hier angegebenen Teilchengrößen des feinteiligen Polymerisats sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Wirkstoffe im Sinne dieser Erfindung sind grundsätzlich alle Substanzen, die bereits in geringer Konzentration in einem Organismus eine physiologische Reaktion hervorrufen. Vorzugsweise handelt es sich bei den Wirkstoffen um Wirkstoffe für den Pflanzenschutz, sowie für den Materialschutz, d. h. Wirkstoffe aus den Gruppen der Herbizide, Fungizide, Insektizide, Akarizide, Nematizide, Bakterizide, Algizide, Molluskizide, Wachstumsregulatoren und sonstiger Biozide.

Für das erfindungsgemäße Verfahren hat es sich als vorteilhaft erwiesen, wenn der Wirkstoff bei einer Temperatur 40°C, insbesondere bei 50°C, besonders bevorzugt bei 60°C, ganz besonders bevorzugt bei 70°C und speziell bei 80°C als Feststoff vorliegt, d.h. der Wirkstoff hat einen Schmelz- oder Zersetzungspunkt oberhalb 40°C, insbesondere oberhalb 50°C, besonders bevorzugt oberhalb 60°C, ganz besonders bevorzugt oberhalb 70°C und speziell oberhalb 80°C, z.B. im Bereich von 80 bis 300°C. Der Wirkstoff kann anorganisch oder organisch sein.

Geeignete Wirkstoffe sind dem Fachmann bekannt, z.B. aus Ullmanns Encyclopedia of Industrial Chemistry, 5th ed. on CD-Rom, Wiley VCH 1997: Kapitel Fungicides, Insect Control und Weed Control sowie aus Compendium of Pesticide common names, http://www.hclrss.demon.co.uk/index.html;

Als Wirkstoffe kommen insbesondere in Betracht:

Herbizid-Wirkstoffe, insbesondere:

- 1,3,4-Thiadiazole wie Buthidazole und Cyprazole ;
- Amide wie Allidochlor, Benzoylprop-ethyl, Bromobutide, Chlorthiamid, Dimepiperate, Dimethenamid, Diphenamid, Etobenzanid, Flamprop, Flamprop-methyl, Fosamine, Isoxaben, Metazachlor, Monalide, Naptalame, Pronamide, Propanil, Propyzamide, Quinonamid;
- Aminotriazole wie Amitrole,
- Anilide wie Anilofos, Mefenacet, Pentanochlor;
- Aryloxyalkansäuren wie 2,4-D, 2,4-DB, Clomeprop, Dichlorprop, Dichlorprop-P, Fenoprop, Fluroxypyr, MCPA, MCPB, Mecoprop, Mecoprop-P, Napropamide, Napropanilide, Triclopyr ;
- Benzoesäuren wie Chloramben, Dicamba;
- Benzothiadiazinone wie Bentazon;
- Bleacher wie Clomazone, Diflufenican, Fluorochloridone, Flupoxam, Fluridone, Karbutylat, Pyrazolate, Sulcotrione, Mesotrione ;
- Carbamate wie Asulam, Carbetamid, Chlorbufam, Chlorpropham, Desmedipham, Phenmedipham, Vemolate;
- Chinolinsäuren wie Quinclorac, Quinmerac;
- Dichlorpropionsäuren wie Dalapon;
- Dihydrobenzofurane wie Ethofumesate;
- Dihydrofuran-3-one wie Flurtamone;
- Dinitroaniline wie Benefin, Butralin, Dinitramine, Ethalfluralin, Fluchloralin, Isopropalin, Nitralin, Oryzalin, Pendimethalin, Prodiamine, Profluralin, Trifluralin;
- Dinitrophenole wie Bromofenoxim, Dinoseb, Dinoseb-acetat, Dinoterb, DNOC, Minoterb-Acetat;
- Diphenylether wie Aciflurofen, Acifluorfen-Natrium, Aclonifen, Bifenox, Chlornitrofen, Difenoxuron, Ethoxyfen, Fluorodifen, Fluoroglycofen-ethyl, Fomesafen, Furyloxyfen, Lactofen, Nitrofen, Nitrofluorfen, Oxyfluorfen;
- Harnstoffe wie Benzthiazuron, DCU, Diflufenzopyr, Methabenzthiazuron;
- Imidazolinone wie Imazamethapyr, Imazapyr, Imazaquin, Imazethabenz-methyl, Imazethapyr, Imazapic, Imazamox;
- Oxadiazole wie Methazole, Oxadiargyl, Oxadiazon;
- Oxirane wie Tridiphane;
- Phenole wie Bromoxynil, loxynil;
- Phenoxyphenoxypropionsäureester wie Clodinafop, Cyhalofop-butyl, Diclofopmethyl, Fenoxaprop-ethyl, Fenoxaprop-p-ethyl, Fenthiaprop-ethyl, Fluazifopbutyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl;
- Phenylessigsäuren wie Chlorfenac;
- Phenylharnstoffe, wie Buturon, Chlorotoluron, Chlorbromuron, Chloroxuron, Dimefuron, Diuron, Fenuron, Isoproturon, Linuron, Monolinuron, Monuron, Metobenzuron, Metobromuron, Metoxuron, Neburon;
- Phenylpropionsäuren wie Chlorophenprop-methyl;
- ppi-Wirkstoffe wie Benzofenap, Flumiclorac, Flumiclorac-pentyl, Flumioxazin, Flumipropyn, Flupropacil, Pyrazoxyfen, Sulfentrazone, Thidiazimin;
- Pyrazole wie Nipyraclofen;
- Pyridazine wie Chloridazon, Maleic hydrazide, Norflurazon, Pyridate;
- Pyridincarbonsäuren wie Clopyralid, Dithiopyr, Picloram, Thiazopyr;
- Pyrimidylether wie Pyrithiobacsäure, Pyrithiobac-Natrium, KIH-2023, KIH-6127;
- Sulfonamide wie Flumetsulam, Metosulam;
- Sulfonylharnstoffe wie Amidosulfuron, Azimsulfuron, Bensulfuron-methyl, Chlorimuron-ethyl, Chlorsulfuron, Cinosulfuron, Cyclosulfamuron, Ethoxysulfuron, E-thametsulfuron-methyl, Flazasulfuron, Flupyrsulfuron-methyl, Foramsulfuron, Halosulfuron-methyl, Imazosulfuron, Idosulfuron, Metsulfuron-methyl, Nicosulfuron, Oxasulfuron, Primisulfuron, Prosulfuron, Pyrazosulfuron-ethyl, Rimsulfuron, Sulfometuron-methyl, Sulfosulfuron, Thifensulfuron-methyl, Triasulfuron, Tribenuronmethyl, Triflusulfuron-methyl, Tritosulfuron;
- Thiadiazolylharnstoffe wie Ethidimuron, Tebuthiuron, Thiazafluron;
- Triazine wie Ametryn, Atrazine, Atraton, Cyanazine, Cyprazine, Desmetryn, Dipropetryn, Isomethiozin, Propazine, Promethryn, Prometon, Sebuthylazine, Secbumethon, Simazine, Tebutryn, Terbumeton, Terbuthylazine, Trietazine ;
- Triazolcarboxamide wie Triazofenamid ;
- Uracile wie Bromacil, Butafenacil, Lenacil, Terbacil ;
- ferner Azafenidin, Aziprotryne, Bromuron, Benazolin, Benfuresate, Bensulide, Benzofluor, Bentazon, Bromofenoxin, Butamifos, Cafenstrole, Chlorthal-dimethyl, Cinmethylin, Cinidon-Ethyl, Defenuron, Dichlobenil, Endothall, Fluorbentranil, Fluthiacet-methyl, Inxynil, Isoxaflutol, Mefluidide, Methazol, Metribuzin, Metramitron, Perfluidone, Piperophos, Topramezone;

- Pflanzenschutz-Wirkstoffe vom Cyclohexenon-Typ wie Alloxydim, Clethodim, Cloproxydim, Cycloxydim, Sethoxydim und Tralkoxydim. Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyl-oxyimino]butyl)-3-hydroxy-5-(2H-tetrahydrothiopyran-3-yl-2-cyclohexen-1-on und vom Sulfonylharnstoff-Typ: N-(((4-methoxy-6-[trifluormethyl]-1.3.5-triazin-2-yl)amino)carbonyl)-2-(trifluormethyl)-benzolsulfonamid;

Fungizid-Wirkstoffe, insbesondere:

- Acylalanine wie Benalaxyl, Metalaxyl, Ofurace, Oxadixyl;
- Aminderivate wie Aldimorph, Dodine, Dodemorph, Fenpropimorph, Fenpropidin, Guazatine, Iminoctadine, Spiroxamin, Tridemorph;
- Anilinopyrimidine wie Pyrimethanil, Mepanipyrim oder Cyprodinil;
- Antibiotika wie Cycloheximid, Griseofulvin, Kasugamycin, Natamycin, Polyoxin und Streptomycin;
- Azole: Azaconazole, Bitertanol, Bromoconazole, Cyproconazole, Dichlobutrazole, Difenoconazole, Dinitroconazole, Epoxiconazole, Fenbuconazole, Fluquinconazole, Flusilazole, Flutriafol, Ketoconazole, Hexaconazole, Metconazole, Myclobutanil, Penconazole, Propiconazole, Prothioconazole, Tebuconazole, Tetraconazole, Triadimefon, Triadimenol, Triflumizole, Triticonazole;
- Dicarboximide wie Iprodione, Myclozolin, Procymidone, Vinclozolin;
- Dithiocarbamate: Ferbam, Nabam, Maneb, Mancozeb, Metam, Metiram, Propineb, Polycarbamat, Thiram, Ziram, Zineb;
- Heterocylische Verbindungen wie Anilazine, Benomyl, Boscalid, Carbendazim, Carboxin, Oxycarboxin, Cyazofamid, Dazomet, Dithianon, Famoxadone, Fenamidone, Fenarimol, Fuberidazole, Flutolanil, Furametpyr, Isoprothiolane, Mepronil, Nuarimol, Probenazole, Proquinazid, Pyrifenox, Pyroquilon, Quinoxyfen, Silthiofam, Thiabendazole, Thifluzamide, Thiophanate-methyl, Tiadinil, Tricyclazole, Triforine;
- Nitrophenylderivative wie Binapacryl, Dinocap, Dinobuton, Nitrophthal-isopropyl;
- Phenylpyrrole wie Fenpiclonil sowie Fludioxonil;
- 2-Methoxybenzophenone, wie sie in EP-A 897904 durch die allgemeine Formel I beschrieben werden, z.B. Metrafenone;
- nicht klassifizierte Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminum, Iprovalicarb, Hexachlorobenzol, Pencycuron, Propamocarb, Phthalide, Toloclofos-Methyl, Quintozene, Zoxamide;
- Strobilurine, wie sie in der WO 03/075663 durch die allgemeine Formel I beschrieben werden, z.B.: Azoxystrobin, Dimoxystrobin, Fluoxastrobin, Kresoximmethyl, Metominostrobin, Orysastrobin, Picoxystrobin, Pyraclostrobin und Trifloxystrobin;
- Sulfensäurederivate wie Captafol, Captan, Dichlofluanid, Folpet, Tolylfluanid;
- Zimtsäureamide und Analoga wie Dimethomorph, Flumetover, Flumorph;
- 6-Aryl-[1,2,4]triazolo[1,5-a]pyrimidine wie sie z.B. in WO 98/46608, WO 99/41255 oder WO 03/004465 jeweils durch die allgemeine Formel I beschrieben werden, beispielsweise 5-Chlor-7-(4-methylpiperidin-1-yl)-6-(2,4,6-trifluorphenyl)-[1,2,4]triazolo[1,5-a]pyrimidin, 5-Chlor-7-(4-methylpiperazin-1-yl)-6-(2,4,6-trifluorphenyl)-[1,2,4]triazolo[1,5-a]pyrimidin,
  5-Chlor-7-(piperidin-1-yl)-6-(2,4,6-trifluorphenyl)-[1,2,4]triazolo[1,5-a]pyrimidin,
  5-Chlor-7-(morpholin-1-yl)-6-(2,4,6-trifluorphenyl)-[1,2,4]triazolo[1,5-a]pyrimidin,
  5-Chlor-7-(isopropylamino)-6-(2,4,6-trifluorphenyl)-[1,2,4]triazolo[1,5-a]pyrimidin,
  5-Chlor-7-(cyclopentylamino)-6-(2,4,6-trifluorphenyl)-[1,2,4]triazolo[1,5-a]pyrimidin,
  5-Chlor-7-(2,2,2-trifluorethylamino)-6-(2,4,6-trifluorphenyl)-[1,2,4]triazolo[1,5-a]pyrimidin,
  5-Chlor-7-(1,1,1-trifluorpropan-2-ylamino)-6-(2,4,6-trifluorphenyl)-[1 ,2,4]triazolo[1 ,5-a]pyrimidin,
  5-Chlor-7-(3,3-dimethylbutan-2-ylamino)-6-(2,4,6-trifluorphenyl)-[1,2,4]triazolo[1,5-a]pyrimidin,
  5-Chlor-7-(cyclohexylmethyl)-6-(2,4,6-trifluorphenyl)-[1,2,4]triazolo[1,5-a]pyrimidin,
  5-Chlor-7-(cyclohexyl)-6-(2,4,6-trifluorphenyl)-[1,2,4]triazolo[1,5-a]pyrimidin,
  5-Chtor-7-(2-methylbutan-3-yl)-6-(2,4,6-trifluorphenyl)-[1,2,4]triazolo[1,5-a]pyrimidin,
  5-Chlor-7-(3-methylpropan-1-yl)-6-(2,4,6-trifluorphenyl)-[1,2,4]triazolo[1,5-a]pyrimidin, 5-Chlor-7-(4-methylcyclohexan-1-yl)-6-(2,4,6-trifluorphenyl)-[1,2,4]triazolo[1,5-a]pyrimidin,
  5-Chlor-7-(hexan-3-yl)-6-(2,4,6-trifluorphenyl)-[1,2,4]triazolo[1,5-a]pyrimidin,
  5-Chlor-7-(2-methylbutan-1-yl)-6-(2,4,6-trifluorphenyl)-[1,2,4]triazolo[1,5-a]pyrimidin,
  5-Chlor-7-(3-methylbutan-1-yl)-6-(2,4,6-trifluorphenyl)-[1,2,4]triazolo[1.5-a]pyrimidin,
  5-Chlor-7-(1-methylpropan-1-yl)-6-(2,4,6-trifluorphenyl)-[1,2,4]triazolo[1,5-a]pyrimidin, 5-Methyl-7-(4-methylpiperidin-1-yl)-6-(2,4,6-trifluorphenyl)-[1,2,4]triazolo[1,5-a]pyrimidin,

5-Methyl-7-(4-methylpiperazin-1-yl)-6-(2,4,6-trifluorphenyl)-[1,2,4]triazolo[1,5-a]pyrimidin,
5-Methyl-7-(morpholin-1-yl)-6-(2,4,6-trifluorphenyl)-[1,2.4]triazolo[1,5-a]pyrimidin,
5-Methyl-7-(piperidin-1-yl)-6-(2,4,6-trifluorphenyl)-[1,2,4]triazolo[1,5-a]pyrimidin,
5-Methyl-7-(isopropylamino)-6-(2,4,6-trifluorphenyl)-[1,2,4]triazolo[1,5-a]pyrimidin,
5-Methyl-7-(cyclopentylamino)-6-(2,4,6-trifluorphenyl)-[1,2,4]triazolo[1,5-a]pyrimidin,
5-Methyl-7-(2,2,2-trifluorethylamino)-6-(2,4,6-trifluorphenyl)-[1,2,4]triazolo[1,5-a]pyrimidin,
5-Methyl-7-(1,1,1-trifluorpropan-2-ylamino)-6-(2,4,6-trifluorphenyl)-[1 ,2,4]triazolo[1 ,5-a]pyrimidin,
5-Methyl-7-(3,3-dimethylbutan-2-ylamino)-6-(2,4,6-trifluorphenyl)-[1,2,4]triazolo[1,5-a]pyrimidin,
5-Methyl-7-(cyclohexylmethyl)-6-(2,4,6-trifluorphenyl)-[1,2,4]triazolo[1,5-a]pyrimidin,
5-Methyl-7-(cyclohexyl)-6-(2,4,6-trifluorphenyl)-[1,2,4]triazolo[1,5-a]pyrimidin,
5-Methyl-7-(2-methylbutan-3-yl)-6-(2,4,6-trifluorphenyl)-[1,2,4]triazolo[1,5-a]pyrimidin, 5-Methyl-7-(3-methylpropan-1-yl)-6-(2,4,6-trifluorphenyl)-[1,2,4]triazolo[1,5-a]pyrimidin, 5-Methyl-7-(4-methylcyclohexan-1-yl)-6-(2,4,6-trifluorphenyl)-[1,2,4]triazolo[1,5-a]pyrimidin,
5-Methyl-7-(hexan-3-yl)-6-(2,4,6-trifluorphenyl)-[1,2,4]triazolo[1,5-a]pyrimidin,
5-Methyl-7-(2-methylbutan-1-yl)-6-(2,4,6-trifluorphenyl)-[1,2,4]triazolo[1,5-a]pyrimidin, 5-Methyl-7-(3-methylbutan-1-yl)-6-(2,4,6-trifluorphenyl)-[1,2,4]triazolo[1,5-a]pyrimidin und 5-Methyl-7-(1-methylpropan-1-yl)-6-(2,4,6-trifluorphenyl)-[1,2,4]triazolo[1,5-a]pyrimidin;

- Amidfungizide wie Cycloflufenamid sowie (Z)-N-(α-(Cyclopropylmethoxyimino)-2,3-difluoro-6-(difluoromethoxy)benzyl]-2-phenylacetamid;

Insektizide, insbesondere:

- Organophosphate wie Azinphos-methyl, Azinphos-eethyl, Chlorpyrifos, Chlorpyrifos-methyl, Chlorfenvinphos, Diazinon, Dimethylvinphos, Dioxabenzofos, Disulfoton, Ethion, EPN, Fenitrothion, Fenthion, Heptenophos, Isoxathion, Malathion, Methidathion, Methyl-Parathion, Paraoxon, Parathion, Phenthoate, Phosalone, Phosmet, Phorate, Phoxim, Pirimiphos-methyl, Profenofos, Prothiofos, Primiphos-ethyl, Pyraclofos, Pyridaphenthion, Sulprofos, Triazophos, Trichlorfon; Tetrachlorvinphos, Vamidothion;
- Carbamate wie Alanycarb, Benfuracarb, Bendiocarb, Carbaryl, Carbofuran, Carbosulfan, Fenoxycarb, Furathiocarb, Indoxacarb, Methiocarb, Pirimicarb, Propoxur, Thiodicarb, Triazamate;
- Pyrethroide wie Acrinathrin, Allethrin, Bioallethrin, Barthrin, Bioethanomethrin, Cyclethrin, Bifenthrin, Cyfluthrin, beta-Cyfluthrin, Cycloprothrin, Cypermethrin, Cyphenothrin, Deltamethrin, Dimefluthrin, Dimethrin, Empenthrin, Esfenvalerate, Etofenprox, Flufenprox, Halfenprox, Protifenbute, Fenpirithrin, Fenfluthrin, Fenpropathrin, Fenvalerate, Flucythrinate, Furethrin, Imiprothrin, Metofluthrin, Cyhalothrin, Lambda-Cyhalothrin, gamma-Cyhalothrin, Permethrin, Biopermethrin, Transpermethrin, Phenothrin, Prallethrin, Profluthrin, Pyresmethrin, Resmethrin, Bioresmethrin, Cismethrin, Silafluofen, Fluvalinate, Tau-Fluvalinate, Tefluthrin, Terallethrin, Tetramethrin, Tralomethrin, alpha-Cypermethrin, beta-Cypermethrin, theta-Cypermethrin, zeta-Cypermethrin, Permethrin;
- Arthropode Wachstumsregulatoren: a) Chitinsyntheseinhibitoren z.B. Benzoylharnstoffe wie Chlorfluazuron, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) Ecdysone Antagonisten wie Halofenozid, Methoxyfenozid, Tebufenozid; c) Juvenoide wie Pyriproxyfen, Methoprene; d) Lipid-Biosyntheseinhibitoren wie Spirodiclofen;
- Neonicotinoide wie Flonicamid, Clothianidin, Dinotefuran, Imidacloprid, Thiamethoxam, Nithiazin, Acetamiprid, Thiacloprid;
- Weitere unklassifizierte Insektizide wie Abamectin, Acequinocyl, Acetamiprid, Amitraz, Azadirachtin, Bensultap, Bifenazate, Cartap, Chlorfenapyr, Chlordimeform, Diafenthiuron, Dinetofuran, Diofenolan, Emamectin, Endosulfan, Ethiprole, Fenazaquin, Fipronil, Formetanate, Formetanate hydrochlorid, gamma-HCH, Hydramethylnon, Imidacloprid, Indoxacarb, Isoprocarb, Metolcarb, Pyridaben, Pymetrozine, Spinosad, Tebufenpyrad, Thiamethoxam, Thiocyclam, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerirn, Cyflumetofen, Acequinocyl, Lepimectin, Profluthrin, Dimefluthrin, XMC und Xylylcarb sowie
- Verbindungen der folgenden Formel

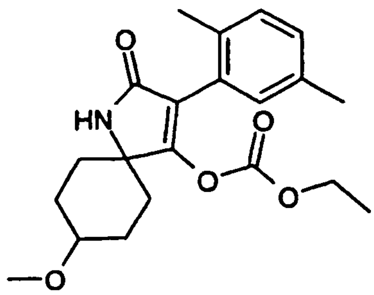

,

- Aminoiso-thiazole der Formel

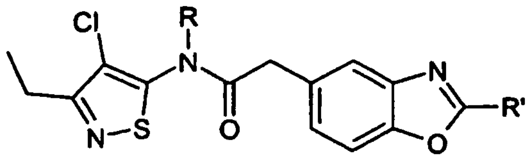

,

worin

R für $CH_2O$-$CH_3$ oder H und
R für $CF_2CF_2$ $CF_3$ stehen;

- Anthranilamide der Formel

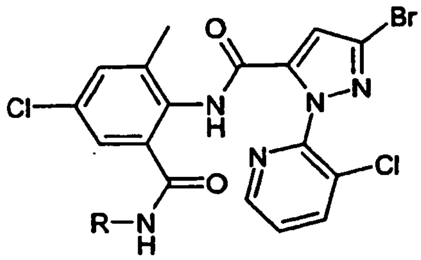

worin R für $C_1$-$C_4$-Alkyl wie Methyl, Ethyl, Isopropyl oder n-Butyl steht,

- Verbindung der folgenden Formeln

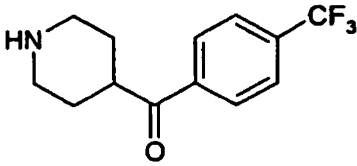

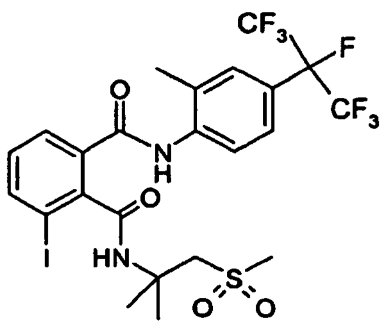

;

weiterhin

- N-Phenylsemicarbazone, wie sie in EP-A 462 456 durch die allgemeine Formel I beschrieben werden, insbesondere Verbindungen der allgemeinen Formel IV

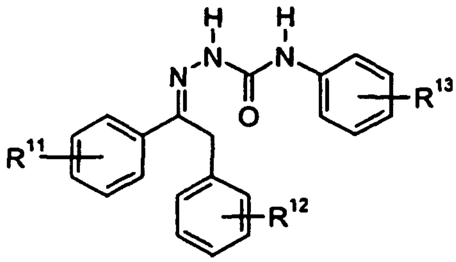

(IV),

worin $R^{11}$ und $R^{12}$ unabhängig voneinander für Wasserstoff, Halogen, CN, $C_1$-$C_4$-Alkyl, $C_1$-$C_4$-Alkoxy, $C_1$-$C_4$-Haloalkyl oder $C_1$-$C_4$-Haloalkoxy stehen und $R^{13}$ für $C_1$-$C_4$-Alkoxy, $C_1$-$C_4$-Haloalkyl oder $C_1$-$C_4$-Haloalkoxy steht, z.B. Verbindung IV, worin $R^{11}$ für 3-$CF_3$ und $R^{12}$ für 4-CN stehen und $R^{13}$ 4-$OCF_3$ bedeutet (= Metaflumizone);

Akarizide, insbesondere Bromopropylat, Spirodiclofen, Clofentezine, Fenpyroxymate, und Hexythiazox;

Wachstumsregulatoren, beispielsweise Ancymidol, Azoluron, Chlorflurenol-methyl, Flurprimidol, Forchlorfenuron, Indolylbuttersäure, Mefluidide, 1-Naphthylacetamid, 1-Naphthylessigsäure, 2-Naphthyloxyessigsäure (Ester), Paclobutrazol, Thidiazuron, 3-CPA, 4-CPA, BAP, Butifos, Tribufos, Butralin, Chlorflurenol, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Guazatin, Imazalil, Karetazan, Kinetin, Lactidichlor-ethyl, Maleic hydrazide, Naptalam, Quinmerac, Sintofen, Tetcyclacis, Triiodobezoicacid, Triapenthenol, Triazethan, Tribufos, Trinexapacethyl, Uniconazol, Propham sowie Gibberillinsäure und Gibberelline. Zu letzteren gehören z.B. die Gibberelline $GA_1$, $GA_3$, $GA_4$, $GA_5$ und $GA_7$ etc. und die entsprechenden exo-16,17-Dihydrogibberelline sowie die Derivate davon, z.B. die Ester mit $C_1$-$C_4$-Carbonsäuren;

Bakterizide, insbesondere 1,2-Benzisothiazol-3(2H)-on (BIT), Carbendazim, Chlorotoluron, Mischungen von 5-Chlor-2-methyl-4-isothiazolin-3-on mit 2-Methyl-4-isothiazolin-3-on, 2,2-Dibrom-3-nitrilopropionamid (DBNPA), Fluometuron, 3-Iod-2-propynylbutylcarbamat (IPBC), Isoproturon, 2-n-Octyl-4-isothiazolin-3-on (OIT), Prometryn, Propiconazole;

Algizide, insbesondere Quinoclamin und Quinonamid;

Bakterizide wie 2-Phenylphenol, Thymol, 4-tert.-Amylphenol, 4-Chlor-3-methylphenol, 4-Chlor-2-benzylphenol und 4-Chlor-3,5-dimethylphenol; sowie

Molluskizide wie Clonitralid;

Bevorzugte Wirkstoffe für die Herstellung von Wirkstoffzusammensetzungen nach dem erfindungsgemäßen Verfahren sind ausgewählt unter Conazolfungiziden, Strobilurinen, Pyrethroiden, Arylpyrrol-Insektiziden. Ebenfalls bevorzugt sind erfindungsgemäße Zusammensetzungen, die eines der obenen beschriebenen 6-Aryl-[1,2,4]triazolo[1,5-a]pyrimidine enthalten.

Zur Bereitstellung der wässrigen Suspension von festen Wirkstoffpartikeln geht man in der Regel von dem festen Wirkstoff aus, der amorph, kristallin oder teilkristallin sein kann und der vorzugsweise bereits in Partikelform vorliegt, z.B. als Pulver, Kristallisat, Granulat oder als zerkleinerte erstarrte Schmelze. Die Partikel des festen Wirkstoffs können reguläre oder irreguläre Form aufweisen. Beispielsweise können die Wirkstoffpartikel in sphärischer oder annährend sphärischer Form oder in Nadelform vorliegen. Selbstverständlich können auch Mischungen verschiedener Wirkstoffe eingesetzt werden.

Für die Bereitstellung der wässrigen Suspension der Wirkstoffpartikel wird der feste Wirkstoff in an sich bekannter Weise auf die gewünschte Teilchengröße zerkleinert, vorzugsweise vermahlen.

Das Zerkleinern erfolgt in hierfür geeigneten Geräten, vorzugsweise in Mühlen wie beispielsweise Kugelmühlen, Rührwerkskugelmühlen, Zirkulationsmühlen (Rührwerkskugelmühle mit Stift-Mahlsystem), Scheibenmühlen, Ringkammermühlen, Doppelkonusmühlen, Dreiwalzenwerke und Batchmühlen. Vorzugsweise sind die Mahlkammern mit Kühlvorrichtungen zur Abführung der beim Mahlvorgang eingetragenen Wärmeenergie ausgestattet.

Bevorzugt führt man das Zerkleinern als Nassmahlung durch, d.h. die Zerkleinerung erfolgt unter Zugabe einer inerten Flüssigkeit, vorzugsweise in Gegenwart einer Teilmenge, vorzugsweise der Hauptmenge, insbesondere wenigstens 80 % - 100 % der oberflächenaktiven Substanz sowie gegebenenfalls in Gegenwart von Wasser und/oder einem organischen Lösungsmittel, das den Wirkstoff nicht zu lösen vermag. Für die Naßmahlung geeignete Apparaturen sind bekannt. Hierzu zählen insbesondere die vorgenannten Mühlen und Dreiwalzenwerke. Besonders geeignet ist die Kugelmühle Drais Superflow DCP SF 12, die Zirkulationsmühle System ZETA der Fa. Netzsch-Feinmahltechnik GmbH oder die Scheibenmühle von der Firma Netzsch Feinmahltechnik GmbH, Selb, Deutschland.

Vorteilhafterweise führt man das Zerkleinern in einer Weise durch, dass der mittlere Durchmesser der Wirkstoffpartikel nach dem Zerkleinern im Bereich von 20 nm bis 1,2 μm, bevorzugt im Bereich von 20 bis 1000 nm, insbesondere im Bereich von 30 bis 800 nm, besonders bevorzugt im Bereich von 40 bis 500 nm und ganz besonders bevorzugt im Bereich von 50 bis 200 nm liegt. Aufgrund von Aggregationsvorgängen beobachtet man nach dem Mahlvorgang häufig Teilchengrößen im Bereich von 300 bis 1200 nm und insbesondere im Bereich von 500 bis 1000 nm. Der tatsächliche Zerkleinerungsgrad ist jedoch in der Regel sehr viel höher, d.h. die Primärteilchengröße der aggregierten Wirkstoffpartikel ist sehr viel kleiner und liegt in den zuvor angegebenen besonders bzw. ganz besonders bevorzugten Bereichen. Der Fachmann erkennt dies leicht, indem er die Polymerisationsschritte des erfindungsgemäßen Verfahrens durchführt, bei dem diese Aggregate aufbrechen, so dass die bei der Polymerisation erzielten Teilchengrößen die beim Zerkleinern erreichten Teilchengrößen wiederspiegeln. Der Fachmann ist in der Regel in der Lage mit wenigen Routineversuchen, die für die gewünschte Teilchengröße der Wirkstoffepartikel erforderlichen Bedingungen des Zerkleinerungsvorgangs zu ermitteln.

Die für das Zerkleinern erforderliche Zeitdauer richtet sich in an sich bekannter Weise nach dem gewünschten Feinheitsgrad bzw. der Teilchengröße der Wirkstoffpartikel und kann vom Fachmann in Routineexperimenten ermittelt werden. Bewährt haben sich beispielsweise Mahldauem im Bereich von ½ Stunde bis 48 Stunden, obwohl auch eine längere Zeitdauer denkbar ist. Bevorzugt ist eine Zeitdauer für das Zerkleinern von 5 bis 24 Stunden.

Druck- und Temperaturbedingungen beim Zerkleinern sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen, wobei üblicherweise Temperaturen gewählt werden, bei denen der Wirkstoff als Feststoff vorliegt.

Erfindungsgemäß enthält die in Schritt a) bereitgestellte wässrige Suspension der Wirkstoffpartikel wenigstens eine oberflächenaktive Substanz zur Stablilisierung der Wirkstoffpartikel. Die oberflächenaktive Substanz kann beim Zerkleinern der Wirkstoffpartikel oder im Anschluss daran zugesetzt werden. Vorzugsweise vermischt man den Wirkstoff vor dem Zerkleinern mit der Hauptmenge, vorzugsweise mit wenigstens 80% und insbesondere mit der Gesamtmenge der in der wässrigen Suspension der Wirkstoffpartikel enthaltenen oberflächenaktiven Substanz.

Vorzugsweise handelt es sich bei der oberflächenaktiven Substanz um eine nichtionische oberflächenaktive Substanz. Geeignet sind aber auch ionische oberflächenaktive Substanzen und Mischungen nichtionischer oberflächenaktiver Substanzen mit ionischen oberflächenaktiven Substanzen, wobei der Anteil von nichtionischen oberflächenaktiven Substanzen in der Mischung vorzugsweise wenigstens 50 Gew.-%, insbesondere 70 bis 99 Gew.-% beträgt. Das Gewichtsverhältnis von Wirkstoff zu oberflächenaktiver Substanz kann in weiten Bereichen gewählt werden und wird in der Regel im Bereich von 50:1 bis 1:2, vorzugsweise im Bereich von 20:1 bis 1:1 und insbesondere im Bereich von 10: 1 bis 1,3:1 liegen.

Beispiele für geeignete nicht-ionische oberflächenaktive Stoffe sind z.B. ethoxylierte Mono-, Di- und Tri-Alkylphenole (Ethoxylierungsgrad: 3 bis 50, Alkylrest: $C_3$-$C_{12}$) sowie ethoxylierte Fettalkohole (EO-Grad: 3 bis 80; Alkylrest: $C_8$-$C_{36}$). Beispiele hierfür sind die Lutensol®-Marken der BASF AG oder die Triton®-Marken der Union Carbide. Besonders bevorzugt sind ethoxylierte lineare Fettalkohole der allgemeinen Formel

$$n\text{-}C_xH_{2x-1}\text{-}O(CH_2CH_2O)_y\text{-}H,$$

wobei x ganze Zahlen im Bereich von 10 bis 24, bevorzugt im Bereich von 12 bis 20 sind. Die Variable y steht vorzugsweise für ganze Zahlen im Bereich von 5 bis 50, besonders bevorzugt 8 bis 40. Ethoxylierte lineare Fettalkohole liegen üblicherweise als Gemisch verschiedener ethoxylierter Fettalkohole mit unterschiedlichem Ethoxylierungsgrad vor. Die Variable y steht im Rahmen der vorliegenden Erfindung für den Mittelwert (Zahlenmittel). Geeignete nichtionische oberflächenaktive Substanzen sind weiterhin Copolymere, insbesondere Blockcopolymere von Ethylenoxid und wenigstens einem $C_3$-$C_{10}$-Alkylenoxid, z.B. Triblockcopolymere der Formel

$$RO(CH_2CH_2O)_{y1}\text{-}(BO)_{y2}(A\text{-}O)_m\text{-}(B'O)_{y3}\text{-}(CH_2CH_2O)_{y4}R'.$$

worin m für 0 oder 1 steht, A für einen von einem aliphatischen, cycloaliphatischen oder aromatischen Diol, abgeleiteten Rest, z.B. für Ethan-1,2-diyl, propan-1,3-diyl, Butan-1,4-diyl, Cyclohexan-1,4-diyl, Cyclohexan-1,2-diyl oder Bis(cyclohexyl)methan-4,4'-diyl steht, B und B' unabhängig voneinander Propan-1,2-diyl, Butan-1,2-diyl oder Phenylethan-1,2-diyl bedeuten, R und R' für Wasserstoff oder $C_1$-$C_{10}$-Alkyl stehen, y1 und y4 unabhängig voneinander für eine Zahl von 2 bis 100 und Y2, Y3 unabhängig voneinander für eine Zahl von 2 bis 100 stehen, wobei die Summe y1 + y2 + y3 + y4 vorzugsweise im Bereich von 20 bis 400 liegt, was einem zahlenmittleren Molekulargewicht im Bereich von 1000 bis 20000 entspricht. Vorzugsweise steht A für Ethan-1,2-diyl, Propan-1,3-diyl oder Butan-1,4-diyl. B steht vorzugsweise für Propan-1,2-diyl.

Geeignete ionische oberflächenaktive Substanzen sind die im folgenden im Zusammenhang mit Schritt b) bzw. Schritt c) genannten anionischen und kationischen Emulgatoren und Schutzkolloide.

Während der Durchführung des Zerkleinerns kann man Wasser zusetzen. Die Menge an Wasser beträgt vorzugsweise 0,5 bis 5 Gew.-Teile, bezogen auf 1 Gew.-Teil des Wirkstoffs. Auch kann man übliche nicht-ionische Mahlhilfsmittel zusetzen.

In einer Variante führt man das Zerkleinern des Wirkstoffs in Gegenwart von nanopartikulärem Siliziumdioxid durch. Unter einem nanopartikulären Siliziumdioxid versteht man ein Siliziumdioxid mit einer durchschnittlichen Teilchengröße < 100 nm, z.B. im Bereich von 1 bis 100 nm und insbesondere im Bereich von 5 bis 50 nm. Das nanopartikuläre Siliziumdioxid wird dabei vorzugsweise in einer Menge von 1 bis 50 Gew.-%. bezogen auf den zu zerkleinernden Wirkstoff eingesetzt. Üblicherweise setzt man das Siliziumdioxid in Form einer wässrigen Dispersion ein, die in der Regel einen Feststoffgehalt von 5 bis 50 Gew.-% und insbesondere 10 bis 40 Gew.-% Siliziumdioxid bezogen auf das Gesamtgewicht der Dispersion aufweist. Der Einsatz von nanopartikulärem Siliziumdioxid führt zu einer verbesserten Stabilisierung der Wirkstoffpartikel, indem es die Agglomeration der Wirkstoffpartikel verhindert, und fördert zudem aufgrund seiner Schleifwirkung den Zerteilungsprozess. Nanopartikuläres Siliziumdioxid, insbesondere wässrige Dispersionen von nanopartikulärem Siliziumdioxid sind dem Fachmann bekannt und im Handel erhältlich, z.B. unter der Bezeichnung Köstrosol® 0830 der Fa. Chemiewerk Bad Köstritz GmbH.

Anschließend suspendiert man die so erhaltenen zerkleinerten Wirkstoffpartikel in einem wässrigem Medium, wobei man eine wässrige Suspension der Wirkstoffpartikel erhält. Zur Dispergierung kann man beliebige Vorrichtungen verwenden, die ein Einmischen der Wirkstoffpartikel in das wässrige Medium erlaubt, beispielsweise Rührkessel Ultraschallhomogenisatoren, Hochdruckhomogenisatoren, Ultra-Thurrax-Geräte und statische Mischer, z.B. Systeme mit Mischdüsen.

Unter wässrigen Medien werden im Sinne der vorliegenden Erfindung solche flüssigen Medien verstanden, die Wasser als Hauptkomponente enthalten, beispielsweise mindestens 60 Gew.-%, bevorzugt mindestens 80 Gew.-% und insbesondere wenigstens 90 Gew.-%. Als weitere Bestandteile kann das wässrige Medium auch oberflächenaktive Substanzen wie zuvor beschrieben enthalten. Ausserdem kann das wässrige Medium bereits einen Teil oder die Gesamtmenge der in Schritt b) zu polymerisierenden Monomere M1 enthalten. In einer bevorzugten Ausführungsform ist Wasser alleiniger flüchtiger Bestandteil des wässrigen Mediums.

Die Menge an wässrigem Medium wählt man vorzugsweise so, dass das Gewichtsverhältnis Mischung aus Wirkstoffpartikeln und oberflächenaktiver Substanz zu wässrigem Medium im Bereich von 2:1 bis 1:20 und insbesondere 1,1:1 bis 1:10 liegt.

Druck und Temperaturbedingungen sind für das Suspendieren der Wirkstoffpartikel im Allgemeinen unkritisch, wobei man in der Regel Bedingungen wählt, bei denen die Wirkstoffpartikel nicht schmelzen. Geeignet sind beispielsweise Temperaturen im Bereich von 5 bis 100°C, bevorzugt 20 bis 85°C und Drücke im Bereich von Normaldruck bis 10 bar.

Alternativ können die wässrigen Suspensionen der Wirkstoffpartikel durch Fällungsmethoden hergestellt werden. Derartige Fällungsmethoden umfassen in der Regel das Lösen des Wirkstoffs in einem mit Wasser mischbaren Lösungsmittel und anschlie-ßendes Vermischen der Lösung mit Wasser in Gegenwart der oberflächenaktiven Substanz, wobei man eine feinteilige Suspensionen des in Wasser nicht löslichen Wirkstoffs erhält, welche zusätzlich die oberflächenaktive Substanz und das organische Lösungsmittel enthält. Anschließend wird man in der Regel das organische Lösungmittel entfernen. Verfahren hierzu wurden für die Herstellung von wässrigen Dispersionen von Farbstoffe beschrieben und können in analoger Weise zur Herstellung der wässrigen Suspension von Wirkstoffen eingesetzt werden.

In der in Schritt a) erhaltenen Suspension führt man, gegebenenfalls nach Verdünnen mit wässrigem Medium, eine Emulsionspolymerisation der Monomerzusammensetzung M1 durch. Die Monomere der Monomerzusammensetzung M1 werden im folgenden auch als Monomere M1 bezeichnet. Hierbei erhält man eine wässrige Dispersion eines wasserunlöslichen Polymeren, das zumindest teilweise an der Oberfläche der Wirkstoffpartikel gebildet wird.

Vorzugsweise wird man in der wässrigen Suspension vor Beginn der Polymerisation, gegebenenfalls durch Verdünnen mit wässrigem Medium, einen Gehalt an Wirkstoff im Bereich von 0,1 bis 400 g/l, insbesondere im Bereich von 0,5 bis 300 g/l und insbesondere 1 bis 200 g/l Suspension einstellen.

Erfindungsgemäß umfassen die Monomere M1 zu wenigstens 95 Gew.%, bezogen auf die Gesamtmenge der Monomere M1, vorzugsweise wenigstens 99 Gew.-% und insbesondere wenigstens 99,9 Gew.-% neutrale, monoethylenisch ungesättigte Monomeren M1.1 mit einer Wasserlöslichkeit von nicht mehr als 30 g/l bei 25 °C/1013 mbar. Insbesondere liegt die Wasserlöslichkeit der Monomere M1.1 unter diesen Bedingungen bei 0,01 bis 20 g/l und speziell 0,1 bis 10 g/l. Geeignete Monomere M1.1 umfassen vinylaromatische Monomere wie Styrol, $\alpha$-Methylstyrol, tert.-Bu-

tylstyrol und Vinyltoluol, Ester α,β-monoethylenisch ungesättigter Mono- und Dicarbonsäuren mit 3 bis 8 und insbesondere 3 oder 4 C-Atomen mit $C_1$-$C_{10}$-Alkanolen oder mit $C_5$-$C_8$-Cycloalkanolen, insbesondere die Ester der Acrylsäure, der Methacrylsäure, der Crotonsäure, die Diester der Maleinsäure, der Fumarsäure und der Itaconsäure und besonders bevorzugt die Ester der Acrylsäure mit $C_2$-$C_{10}$-Alkanolen (= $C_2$-$C_{10}$-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat und die Ester der Methacrylsäure mit $C_2$-$C_{10}$-Alkanolen wie Ethylmethacrylat, n-Butylmethacrylat, Isobutylmethacrylat, tert.-Butylmethacrylat, n-Hexylmethacrylat und dergleichen. Geeignete Monomere M1.1 sind außerdem Vinyl- und Allylester aliphatischer Carbonsäuren mit 3 bis 10 C-Atomen, beispielsweise Vinylpropionat sowie die Vinylester der Versatic®-Säuren (Vinylversatate), Vinylhalogenide wie Vinylchlorid und Vinylidenchlorid, konjugierte Diolefine wie Butadien und Isopren sowie $C_2$-$C_6$-Olefine wie Ethylen, Propen, 1-Buten und n-Hexen. Bevorzugte Monomere M1.1 sind vinylaromatische Monomere, $C_2$-$C_{10}$-Alkylacrylate, insbesondere $C_2$-$C_8$-Alkylacrylate, speziell tert.-Butylacrylat sowie $C_2$-$C_{10}$-Alkylmethacrylate und insbesondere $C_2$-$C_4$-Alkylmethacrylate. Insbesondere sind wenigstens 70 Gew.-% der Monomere M1.1 ausgewählt unter vinylaromatischen Monomeren, insbesondere Styrol, Estern der Methacrylsäure mit $C_2$-$C_4$-Alkanolen und tert.-Butylacrylat. Besonders bevorzugte Monomere M1.1 sind vinylaromatische Monomere, speziell Styrol, und Mischungen von vinylaromatischen Monomeren mit den vorgenannnten $C_2$-$C_8$-Alkylacrylaten und/oder $C_2$-$C_4$-Alkylmethacrylaten, insbesondere solche Mischungen mit einem Anteil an Vinylaromaten von wenigstens 60 Gew.%, bezogen auf die Gesamtmenge der Monomere M1.1.

Weiterhin können die Monomere M1 außerdem bis zu 5 Gew.-%, z.B. 0,1 bis 5 Gew.-%, bezogen auf das Gesamtgewicht der Monomere M1, ein oder mehrere von den Monomeren M1.1 verschiedene ethylenisch ungesättigte Monomere M1.2 umfassen. Vorzugsweise macht der Anteil der Monomere M1.2 an der Gesamtmenge der Monomere M1 weniger als 1 Gew.-%, insbesondere nicht mehr als 0,1 Gew.-% aus. Die Monomere M1.2 können 1 oder mehrere, z.B. 1, 2, 3 oder 4 ethylenisch ungesättigte Doppelbindungen aufweisen und sind in der Regel unter den bei Schritt c) als Monomere M2.2 genannten Monomeren ausgewählt.

Es hat sich als vorteilhaft erwiesen, die Monomere der Monomerzusammensetzung M1 so zu wählen, dass sie einem Polymerisat 1 mit einer theoretischen Glasübergangstemperatur nach Fox $T_g$(Fox) von wenigstens 50°C entspricht. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von nicht oder schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \ldots\ldots \frac{X^n}{T_g^{\,n}}$$

wobei $X^1$, $X^2$, ..., X" die Massenbrüche der Monomeren 1, 2, ..., n und $T_g^{\,1}$, $T_g^{\,2}$, ..., $T_g^{\,n}$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Im übrigen versteht man unter der Glasübergangstemperatur Tg die gemäß ASTM D 3418-82 durch Differentialthermoanalyse (DSC) ermittelte "midpoint temperature" (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Polymerisation der Monomere M1 erfolgt nach der Methode einer Emulsionspolymerisation, d.h. die zu polymerisierenden Monomer M1 liegen in der Polymerisationsmischung als wässrige Emulsion vor.

Die Monomere M1 können hierzu in Substanz oder in Form einer wässrigen Emulsion zu der Suspension des Wirkstoffs gegeben werden. Die Monomere M1 können im Reaktor vor Beginn der Polymerisation vorgelegt werden oder unter Polymerisationsbedingungen in einer oder mehreren Portionen oder kontinuierlich zugegeben werden. Vorzugsweise legt man die Hauptmenge der Monomere M1, insbesondere wenigstens 80% und besonders bevorzugt die Gesamtmenge oder nahezu die Gesamtmenge im Polymerisationsgefäß vor und startet anschließend die Polymerisation durch Zugabe eines Polymerisationsinitiators.

Vorzugsweise setzt man die Monomere M1 in Schritt b) in einer Menge ein, dass das Gewichtsverhältnis von Wirkstoff zu Monomer M1 im Bereich von 10:1 bis 1:50, insbesondere 5:1 bis 1:30 und besonders bevorzugt im Bereich 2:1 bis 1:20 liegt.

Die für die Emulsionspolymerisation in Schritt b) geeigneten Starter sind die für eine Emulsionspolymerisation geeigneten und üblicherweise verwendeten Polymerisationsinitiatoren, die eine radikalische Polymerisation ethylenisch ungesättigter Monomere auslösen. Hierzu zählen Azoverbindungen wie 2,2'-Azobis-isobutyronitril, 2,2'-Azobis(2-methylbutyronitril), 2,2'-Azobis-[2-methyl-N-(2-hydroxyethyl)propionamid, 1,1'-Azobis(1-cyclohexancarbonitril), 2,2'-Azobis(2,4-dimethylvateronitril), 2,2'-Azobis(N,N'-dimethylenisobutyroamidin)dihydrochlorid, und 2,2'-Azobis(2-amidinopropan)dihydrochlorid, organische oder anorganische Peroxide wie Diacetylperoxid, Di-tert.-butylperoxid, Diamylperoxid, Dioctano-ylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperben-zoat, tert.-Butylperoxid, tert.-Butylhydroperoxid, Cumolhydroperoxid, tert.-Butylperoxi-2-ethylhexanoat und Diisopropylperoxidicarbamat; Salze der Peroxodischwefelsäure und Redox-Initiatorsysteme.

Vorzugsweise setzt man zur Polymerisation in Schritt b) ein Redoxinitiatorsystem ein, insbesondere ein Redoxinitiatorsystem, das als Oxidationsmittel ein Salz der Peroxodischwefelsäure, Wasserstoffperoxid oder ein organisches Peroxid wie tert.-Butylhydroperoxid enthält. Als Reduktionsmittel enthalten die Redoxinitiatorsysteme vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat. Besonders bevorzugte Redoxinitiatorsysteme sind Acetonbisulfit-Addukt/organisches Hydroperoxid wie tert-Butylhydroperoxid; Natriumdisulfit ($Na_2S_2O_5$)/organisches Hydroperoxid wie tert-Butylhydroperoxid; Natriumhydroxymethansulfinat/organisches Hydroperoxid wie tert-Butylhydroperoxid; und Ascorbinsäure/Wasserstoffperoxid.

Üblicherweise setzt man den Initiator in einer Menge von 0,02 bis 2 Gew.-% und insbesondere 0,05 bis 1,5 Gew.-%, bezogen auf die Menge der Monomere M1 ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden.

Druck und Temperatur sind für die Durchführung der Polymerisation der Monomere M1 von untergeordneter Bedeutung. Die Temperatur hängt naturgemäß vom eingesetzten Initiatorsystem ab und eine optimale Polymerisationstemperatur kann vom Fachmann durch Routineexperimente ermittelt werden. Üblicherweise liegt die Polymerisationstemperatur im Bereich von 0 bis 110 °C, häufig im Bereich von 30 bis 95 °C. Vorteilhafterweise wählt man eine Polymerisationstemperatur bei welcher der Wirkstoff als Feststoff vorliegt. Der Polymerisation wird üblicherweise bei Normaldruck bzw. Umgebungsdruck durchgeführt. Sie kann aber auch bei erhöhtem Druck, z. B. bis 10 bar oder bei geringfügig erniedrigtem Druck z. B. > 800 mbar durchgeführt werden. Die Polymerisationsdauer in Schritt b) beträgt vorzugsweise 1 bis 120 Minuten, insbesondere 2 bis 90 Minuten und besonders bevorzugt 3 bis 60 Minuten, wobei auch längere oder kürzere Polymerisationsdauern möglich sind.

Vorzugsweise polymerisiert man in Schritt b) unter den sogenannten "starved conditions". d.h. Bedingungen, die möglichst nur eine geringe oder keine Bildung von leeren Mizellen und damit die Bildung von wirkstofffreien Polymerpartikeln erlauben. Hierzu setzt man entweder keine weitere oberflächenaktive Substanz oder nur so wenig weitere oberflächenaktive Substanz zu, so dass die Wirkstoffteilchen von den wasserunlöslichen Monomeren benetzt werden und in der wässrigen Phase stabilisiert werden. So erreicht man, dass keine messbaren Anteile an stabilisierten Tröpfchen von Monomer M1 in der Reaktionsmischung vorliegen, in denen eine Polymerisation stattfinden kann, und die in der Polymerisationsmischung enthaltenen oberflächenaktiven Substanzen dienen im Wesentlichen zum Netzen der Oberfläche der Wirkstoffpartikel und zum Transport von Monomer M1 durch die kontinuierliche wässrige Phase. Vorzugsweise setzt man an weiteren oberflächenaktiven Substanzen nicht mehr als 5 Gew.%, z.B. 0,1 bis 5 Gew.-%, bezogen auf die zu polymerisierenden Monomere M1 zu. Als weitere oberflächenaktive Substanzen kommen neben den nichtionischen oberflächenaktiven Substanzen insbesondere auch anionische Emulgatoren, z.B. Alkylsulfate, Alkylsulfonate, Alkylarylsulfonate, Alkylethersulfate, Alkylarylethersulfate, (Di)alkylsulfosuccinate wie Sulfobernsteinsäurehalbester und Sulfobemsteinsäurediester und Alkyletherphosphate und weiterhin die in Schritt c) genannten kationischen Emulgatoren in Betracht. Bevorzugte weitere Emulgatoren in Schritt b) sind die vorgenannten anionischen Emulgatoren. In einer bevorzugten Ausführungsform der Erfindung führt man die Polymerisation der Monomere M1 in Gegenwart eines solchen anionischen Emulgators durch.

Natürlich kann man der Polymerisationsmischung in Schritt b) weitere Zusatzstoffe beifügen, die in der Emulsionspolymerisation üblich sind, beispielsweise Glykole, Polyethylenglykole, Puffer/pH-Wert-Regulatoren, Molekulargewichtsregler und Kettenübertragungsinhibitoren.

Man erhält nach Schritt b) eine wässrige Polymer/Wirkstoffdispersion, wobei die Wirkstoffpartikel der ursprünglich bereitgestellten Wirkstoffsuspension mit dem aus den Monomeren M1 gebildeten, wasserunlöslichen Polymer zumindest teilweise umhüllt werden. Man beobachtet keine messbaren oder nur äußerst geringe Anteile an Agglomeraten, die in der Regel weniger als 2 Gew.%, bevorzugt weniger als 0,2 Gew.-%, bezogen auf die in der Dispersion enthaltenen Feststoffe ausmachen.

Man kann in einem weiteren Schritt die nach b) erhältlichen, dispergierten, mit Polymer bzw. Copolymer umhüllten Wirkstoffpartikel durch Reinigungsoperationen, beispielsweise Filtrieren, Dekantieren, Waschen isolieren und

zur Ausübung von Schritt c) des erfindungsgemäßen Verfahrens redispergieren. Vorzugsweise setzt man jedoch die nach b) erhältliche wässrige Dispersion ohne weitere Reinigungs- oder Isolierungsmaßnahmen, d.h. in situ, weiter um.

In Schritt c) des erfindungsgemäßen Verfahrens führt man eine Emulsionspolymerisation der Monomere M2 in einer wässrigen Dispersion der in Schritt b) erhaltenen Polymer-Wirkstoffpartikel durch.

Erfindungsgemäß umfassen die Monomere M2 zu wenigstens 60 Gew.-%, bezogen auf die Gesamtmenge der Monomere M2, vorzugsweise wenigstens 70 Gew.-% und insbesondere wenigstens 80 Gew.-% neutrale, monoethylenisch ungesättigte Monomeren M2.1 mit einer Wasserlöslichkeit von nicht mehr als 30 g/l bei 25 °C/1013 mbar Als Monomere kommen grundsäztlich alle als Monomere M1.1 genannten Monomere sowie Methylmethacrylat und Vinylacetat in Betracht.

In einer bevorzugten Ausführungsform der vorliegenden Erfindung umfassen die in Schritt c) eingesetzten Monomere M2.1 wenigstens ein Monomer, welches das in Schritt b) hergestellte Polymer anquellen kann. Unter Anquellen wird verstanden, dass unter Normalbedingungen mindestens 5 Gew.-% Monomer M2.1 in das Polymer aus Schritt b) physikalisch eingelagert werden kann.

In einer bevorzugten Ausführungsform der Erfindung sind die Monomere M2.1 unter vinylaromatischen Monomeren und den vorgenannten Estern $\alpha,\beta$-ethylenisch ungesättigter $C_3$-$C_{10}$-Mono- und Dicarbonsäuren mit $C_1$-$C_{10}$-Alkanolen einschließlich Methylmethacrylat oder $C_3$-$C_{10}$-Cycloalkanolen ausgewählt. Hierbei handelt es sich um Monomere , die das in Schritt b) hergestellte Polymer anquellen.

Weiterhin können die Monomere M2 außerdem bis zu 40 Gew.-%, z.B. 0,5 bis 40 Gew.%, insbesondere 1 bis 30 Gew.%, bezogen auf das Gesamtgewicht der Monomere M2, ein oder mehrere von den Monomeren M2.1 verschiedene ethylenisch ungesättigte Monomere M2.2 umfassen.

Zu den Monomeren M2.2 zählen insbesondere monoethylenisch ungesättigte Monomere M2.2a, die wenigstens eine Säuregruppe oder wenigstens eine anionische Gruppe aufweisen, insbesondere Monomere M2.2a, die eine Sulfonsäuregruppe, eine Phosphonsäuregruppe oder ein oder zwei Carbonsäuregruppen aufweisen, sowie die Salze der Monomere M2.2a, insbesondere die Alkalimetallsalze, z. B. die Natrium- oder Kaliumsalze sowie die Ammoniumsalze. Hierzu zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, ethylenisch ungesättigte Phosphonsäuren, wie Vinylphosphonsäure und Vinylphosphonsäuredimethylester und deren Salze und a,$\beta$-ethylenisch ungesättigte $C_3$-$C_8$-Mono- und $C_4$-$C_8$-Dicarbonsäuren, insbesondere Acrylsäure, Methacrylsäure, Crotonsäure, Maleinsäure, Fumarsäure und Itaconsäure. Der Anteil der Monomere M2.2a wird häufig nicht mehr als 35 Gew.%, vorzugsweise nicht mehr als 20 Gew.%, z. B. 0,1 bis 20 Gew.% und insbesondere 0,5 bis 15 Gew.-%, bezogen auf die Gesamtmenge der Monomere M2, ausmachen.

Zu den Monomeren M2.2 zählen weiterhin die monoethylenisch ungesättigten, neutralen Monomere M2.2b, die eine Wasserlöslichkeit von wenigstens 50 g/l bei 25 °C und insbesondere wenigstens 100 g/l bei 25 °C aufweisen. Beispiele hierfür sind die Amide der vorgenannten ethylenisch ungesättigten Carbonsäuren, insbesondere Acrylamid und Methacrylamid, ethylenisch ungesättigte Nitrile wie Methacrylnitril und Acrylnitril, Hydroxyalkylester der vorgenannten a,$\beta$-ethylenisch ungesättigten $C_3$-$C_8$-Monocarbonsäuren und der $C_4$-$C_8$-Dicarbonsäuren, insbesondere Hydroxyethylacrylat, Hydroxyethylmethacrylat, 2- und 3-Hydroxypropylacrylat, 2- und 3-Hydroxypropylmethacrylat, Ester der vorstehend genannten monoethylenisch ungesättigten Mono- und Dicarbonsäuren mit $C_2$-$C_4$-Polyalkylenglykolen, insbesondere die Ester dieser Carbonsäuren mit Polyethylenglykol oder Alkyl-Polyethylenglykolen, wobei der (Alkyl)polyethylenglykol-Rest üblicherweise ein Molekulargewicht im Bereich von 100 bis 3000 aufweist. Zu den Monomeren M2.2b zählen weiterhin N-Vinylamide wie N-Vinylformamid, N-Vinylpyrrolidon, N-Vinylimidazol und N-Vinylcaprolactam. Der Anteil der Monomere M2.2b wird vorzugsweise nicht mehr als 20 Gew.%, und insbesondere nicht mehr als 10 Gew.-%, z. B. 0,1 bis 10 und insbesondere 0,5 bis 5 Gew.-%, bezogen auf die Gesamtmenge der Monomere M2, ausmachen.

Zu den Monomeren M2.2 zählen weiterhin monoethylenisch ungesättigte Monomere M2.2c, die wenigstens eine kationische Gruppe und/oder wenigstens eine im Wässrigen protonierbare Gruppe aufweisen. Zu den Monomeren M2.2c zählen insbesondere solche, die eine protonierbare Aminogruppe, eine quartäre Ammoniumgruppe, eine protonierbare Iminogruppe oder eine quaternisierte Iminogruppe aufweisen. Beispiele für Monomere mit einer protonierbaren Iminogruppe sind N-Vinylimidazol und Vinylpyridine. Beispiele für Monomere mit einer quatemisierten Iminogruppe sind N-Alkylvinylpyridiniumsalze und N-Alkyl-N'-vinylimidazoliniumsalze wie N-Methyl-N'-vinylimidazoliniumchlorid oder Methosulfat. Unter den Monomeren M2.2c werden insbesondere die Monomere der allgemeinen Formel I bevorzugt

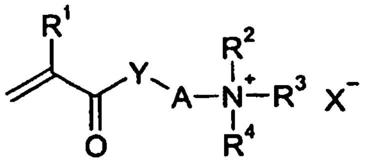

(I)

worin

- $R^1$ Wasserstoff oder $C_1$-$C_4$-Alkyl, insbesondere Wasserstoff oder Methyl,
- $R^2$, $R^3$ unabhängig voneinander $C_1$-$C_4$-Alkyl, insbesondere Methyl, und
- $R^4$ Wasserstoff oder $C_1$-$C_4$-Alkyl, insbesondere Wasserstoff oder Methyl bedeuten,
- Y für Sauerstoff, NH oder $NR^5$ mit $R^5$ = $C_1$-$C_4$-Alkyl steht,
- A für $C_2$-$C_8$-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht und
- $X^-$ für ein Anionenäquivalent, z. B. für $Cl^-$, $HSO_4^-$, ½ $SO_4^{2-}$ oder $CH_3OSO_3^-$ etc. steht,

und für $R^4$ = H den freien Basen der Monomere der Formel I.

Beispiele für derartige Monomere M2.2c sind 2-(N,N-Dimethylamino)ethylacrylat, 2-(N,N-Dimethylamino)ethylmethacrylat, 2-(N,N-Dimethylamino)ethylacrylamid, 3-(N,N-Dimethylamino)propylacrylamid, 3-(N,N-Dimethylamino)propylmethacrylamid, 2-(N,N-Dimethylamino)ethylmethacrylamid, 2-(N,N,N-Trimethylammonium)ethylacrylat-Chlorid, 2-(N,N,N-Trimethylammonium)ethylmethacrylat-Chlorid, 2-(N,N,N-Trimethylammonium)ethylmethacrylamid-Chlorid, 3-(N,N,N-Trimethylammonium)propylacrylamid-Chlorid, 3-(N,N,N-Trimethylammonium)propylmethacrylamid-Chlorid, 2-(N,N,N-Trimethylammonium)ethylacrylamid-Chlorid, sowie die entsprechenden Methosulfate und Sulfate.

In einer bevorzugten Ausführungsform umfassen die das Polymerisat bildenden Monomere M2 wenigstens ein Monomer M2.2c. Der Anteil der Monomere M2.2c beträgt dann vorteilhafterweise 0,1 bis 20 Gew.-%, insbesondere 0,5 bis 10 Gew.-%, und besonders bevorzugt 1 bis 7 Gew.-%, bezogen auf die Gesamtmenge der Monomere M2.

Zu den Monomeren M2 zählen weiterhin alle Monomere, die üblicherweise in einer Emulsionspolymerisation eingesetzt werden können. Der Anteil an Monomeren, die zwei oder mehrere, nichtkonjugierte ethylenisch ungesättigte Doppelbindungen aufweisen, macht jedoch üblicherweise nicht mehr als 5 Gew.%, insbesondere nicht mehr als 2 Gew. %, z. B. 0,01 bis 2 Gew.% und insbesondere 0,05 bis 1,5 Gew.%, bezogen auf die Gesamtmenge der Monomere M2 aus.

Je nach Anwendungszweck können die Monomere M2 auch sogenannte funktionale Monomere umfassen, d.h. Monomere, die neben eine polymerisierbaren C=C-Doppelbindung auch noch eine reaktive funktionelle Gruppe aufweisen, beispielsweise eine Oxirangruppe, eine reaktive Carbonylgruppe., z.B. eine Acetoacetylgruppe, eine Isocyanat-Gruppe, eine N-Hydroxymethylgruppe, eine N-Alkoxymethylgruppe, eine Trialkylsilylgruppe, eine Trialkoxysilylgruppe oder eine sonstige, gegenüber Nucleophilen reaktive Gruppe.

Ferner hat es sich als vorteilhaft erwiesen, wenn die Monomerzusammensetzung M2 sow gewählt ist, dass das resultierende Polymer eine Glasübergangstemperatur von wenigstens 0°C, vorzugsweise wenigstens 10°C, insbesondere im Bereich von 20 bis 130°C aufweist.

Die Menge an Monomer M2 wird in der Regel so gewählt, dass das Gewichtsverhältnis von Wirkstoff zu der Gesamtmenge der Monomermischungen M1 und M2 im Bereich von 9:1 bis 1:100, insbesondere 5:1 bis 1:40 und speziell 2:1 bis 1:30 liegt.

Die Polymerisation der Monomere M2 erfolgt unter den für eine Emulsionspolymerisation üblichen Bedingungen, d.h. in Gegenwart wenigstens eines üblicherweise verwendeten Polymerisationsinitiators, der eine radikalische Polymerisation ethylenisch ungesättigter Monomere auslösen kann. Hierzu zählen die in Schritt b) genannten Polymerisationsinitiatoren. Vorzugsweise setzt man wasserlösliche Initiatoren ein, z. B. die in Schritt b) genannten wasserlöslichen Initiatoren.

üblicherweise setzt man den Initiator in einer Menge von 0,02 bis 2 Gew.-% und insbesondere 0,05 bis 1,5

Gew.-%, bezogen auf die Menge der Monomere M2 ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Vorzugsweise gibt man die Hauptmenge des Initiators, insbesondere wenigstens 80 %, z. B. 80 bis 99,5 % des Initiators im Verlauf der Polymerisation der Monomere M2 in den Polymerisationsreaktor.

Druck und Temperatur sind für die Polymerisation der Monomere M2 von untergeordneter Bedeutung. Die Temperatur hängt naturgemäß vom eingesetzten Initiatorsystem ab und eine optimale Polymerisationstemperatur kann vom Fachmann durch Routineexperimente ermittelt werden. Üblicherweise liegt die Polymerisationstemperatur im Bereich von 0 bis 110 °C, häufig im Bereich von 30 bis 95 °C. Der Polymerisation wird üblicherweise bei Normaldruck bzw. Umgebungsdruck durchgeführt. Sie kann aber auch bei erhöhtem Druck, z. B. bis 10 bar oder bei geringfügig erniedrigtem Druck z. B. > 800 mbar durchgeführt werden.

In der Regel erfolgt die Polymerisation in Schritt c) nach einem sogenannten Monomerzulaufverfahren, d. h. die Hauptmenge, vorzugsweise wenigstens 70 % und insbesondere wenigstens 90 % der Monomere M2 wird im Verlauf der Polymerisationsreaktion dem Polymerisationsgefäß zugeführt. Die Zufuhr der Monomere M2 kann in Form einer wässrigen Monomeremulsion der Monomere M2 erfolgen oder die Monomere M2 werden in Substanz der Polymerisationsreaktion zugeführt. Vorzugsweise erfolgt die Zugabe der Monomere M2 über einen Zeitraum von wenigstens 0,5 h, vorzugsweise wenigstens 1 h, z.B. 1 bis 10 h und insbesondere 1,5 bis 5 h. Die Zugabe der Monomere M2 kann mit konstanter oder veränderlicher Zugaberate, z. B. in Intervallen mit konstanter Zugaberate oder mit veränderlicher Zugaberate oder kontinuierlich mit veränderlicher Zugaberate erfolgen. Die Zusammensetzung der Monomerzusammensetzung M2 kann während der Zugabe konstant bleiben oder geändert werden.

In einer Ausführungsform der Erfindung ändert man im Verlauf der Monomerzugabe die Monomerzusammensetzung M2 dergestalt, dass man in den Polymerteilchen Polymerbereiche mit unterschiedlicher Glasübergangstemperatur erhält. Dies erreicht durch eine sogenannten Stufenpolymerisation. Hierzu polymerisiert man zunächst in einer ersten Stufe eine erste Monomerzusammensetzung 2, deren Monomerzusammensetzung einer Glasübergangstemperatur $T_G^1$ entspricht, und gibt hierzu anschließend eine zweite Monomerzusammensetzung 2, die einer Glasübergangstemperatur $T_G^2$ entspricht (2. Stufe) und gegebenenfalls im Anschluss daran sukzessive eine oder mehrere weitere Monomerzusammensetzungen 2, die jeweils einer Glasübergangstemperatur $T_G^n$ entsprichen, wobei n für die jeweilige Stufe steht. Vorzugsweise unterscheiden sich die jeweiligen Glasübergangstemperaturen in aufeinanderfolgenden Polymerisationsstufen erhaltenen Polymere um wenigstens 10 K, insbesondere um wenigstens 20 K und besonders bevorzugt um wenigstens 30 K, z. B. 30 K bis 200 K, insbesondere 40 K bis 160 K. In der Regel wird die in einer Stufe polymerisierte Monomermenge, bezogen auf die Gesamtmenge der Monomere M2, wenigstens 5 Gew.-%, vorzugsweise wenigstens 10 Gew.-%, z. B. 5 bis 95 Gew.-%, insbesondere 10 bis 90 Gew.-% bei einer 2-stufigen Polymerisation und 5 bis 90 bzw. 5 bis 85 Gew.-%, insbesondere 10 bis 80 Gew.-% bei einer drei- oder mehrstufigen Polymerisation ausmachen.

Vorzugsweise fügt man der Polymerisation der Monomere M2 eine weitere Menge wenigstens einer oberflächenaktiven Substanz zu. Die weitere Menge an oberflächenaktiver Substanz liegt üblicherweise im Bereich von 0,1 bis 10 Gew.-%, bezogen auf die Gesamtmenge der Monomere M2.

Als weitere oberflächenaktive Substanzen in Schritt c) kommen die üblicherweise für die Emulsionspolymerisation eingesetzten Emulgatoren und Schutzkolloide in Betracht. Hierzu zählen die oben im Zusammenhang mit Schritt a) erwähnten nichtionischen oberflächenaktiven Substanzen, weiterhin, anionische Emulgatoren, anionische Schutzkolloide, kationische Emulgatoren, kationische Schutzkolloide und zwitterionische (betainische) Emulgatoren.

Die für die Emulsionspolymerisation in Schritt c) üblicherweise eingesetzten Mengen an oberflächenaktiven Substanzen liegen üblicherweise in den oben angegebenen Bereichen, so dass die Gesamtmenge oder ein Teil der in den erfindungsgemäßen Zusammensetzungen oberflächenaktiven Substanzen über die Emulsionspolymerisation zugeführt wird. Es ist jedoch auch möglich, nur einen Teil, z. B. 10 bis 90 Gew.-%, insbesondere 20 bis 80 Gew.-% der in der erfindungsgemäßen Zusammensetzung enthaltenen oberflächenaktiven Substanzen in der Emulsionspolymerisation einzusetzen und die Restmenge an oberflächenaktiver Substanz im Anschluss an die Emulsionspolymerisation, vor oder nach eine gegebenenfalls durchzuführenden Desodorierung der Emulsionspolymerisation zuzugeben (Nachseifen).

Beispiele für anionische oberflächenaktive Substanzen, die für Schritt c) geeignet sind, umfassen anionische Emulgatoren wie Alkylphenylsulfonate, Phenylsulfonate, Alkylsulfate, Alkylsulfonate, Alkylethersulfate, Alkylphenolethersulfate, Alkylpolyglykoletherphosphate, Alkyldiphenylethersulfonate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, einschließlich ihrer Alkali-, Erdalkali-, Ammonium- und Amin-Salze. Beispiele für anionische Schutzkolloide sind Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin- , Sulfit-Ablauge und Ligninsulfonate sowie Polycarboxylate wie Polyacrylate, Maleinsäureanhydrid/Olefin-Copolymere (z. B. Sokalan® CP9, BASF) sowie die Alkali-, Erdalkali-, Ammonium- und Amin-Salze

der vorgenannten Schutzkolloide.

Beispiele für kationische Emulgatoren, die für Schritt c) geeignet sind, umfassen quartäre Ammoniumsalze, z. B. Trimethyl- und Triethyl-$C_6$-$C_{30}$-alkylammoniumsalze wie Cocotrimethylammoniumsalze, Trimethylcetylammoniumsalze, Dimethyl- und Diethyl-di-$C_4$-$C_{20}$-alkylammoniumsalze wie Didecyldimethylammoniumsalze und Dicocodimethylammoniumsalze, Methyl- und Ethyl-tri-$C_4$-$C_{20}$-alkylammoniumsalze wie Methyltrioctylammoniumsalze, $C_1$-$C_{20}$-Alkyl-di-$C_1$-$C_4$-alkylbenzylammoniumsalze wie Triethylbenzylammoniumsalze und Cocobenzyldimethylammoniumsalze, Methyl- und Ethyl-di-$C_4$-$C_{20}$-alkylpoly(oxyethyl)ammoniumsalze, z. B. Didecylmethylpoly(oxyethyl)ammoniumsalze, N-$C_6$-$C_{20}$-Alkylpyridiniumsalze, z. B. N-Laurylpyridiniumsalze, N-Methyl- und N-Ethyl-N-$C_8$-$C_{20}$-alkylmorpholiniumsalze, sowie N-Methyl- und N-Ethyl-N'-$C_6$-$C_{20}$-alkylimidazoliniumsalze, insbesondere die Halogenide, Borate, Carbonate, Formiate, Acetate, Propionate, Hydrogencarbonate, Sulfate und Methosulfate.

Beispiele für kationische Schutzkolloide, die für Schritt c) geeignet sind, umfassen Homo- und Copolymere der obengenannten Monomere M2c mit einem Gehalt an Monomere M2.2c von wenigstens 20 Gew.-%, insbesondere wenigstens 30 Gew.-% Monomere M2.2c, beispielsweise Homopolymere von N-Vinyl-N-methylimidazoliniumsalzen oder von N-Alkylvinylpyridiniumsalzen sowie Copolymere dieser Monomere mit neutralen, vorzugsweise mit Wasser mischbaren Monomeren M2.2b

Zwitterionische Emulgatoren sind solche mit betainischen Strukturen. Derartige Substanzen sind dem Fachmann bekannt und können dem einschlägigen Stand der Technik entnommen werden (siehe beispielsweise R. Heusch, in Ullmanns Encylopedia of Industrial Chemistry, 5th ed. on CD-ROM, Wiley-VCH 1997, "Emulsions", Kapitel 7, Tabelle 4).

Selbstverständlich kann das Molekulargewicht der Polymere in Schritt c) durch Zugabe von Reglern in einer geringen Menge, z. B. 0,01 bis 2 Gew.%, bezogen auf die polymerisierenden Monomere M, eingestellt werden. Als Regler kommen insbesondere organische Thioverbindungen, ferner Allylalkohole und Aldehyde in Betracht.

Im Anschluss an die eigentliche Polymerisationsreaktion in Schritt c) ist es gegebenenfalls von Vorteil, die erhaltenen wässrigen Polymer/Wirkstoffzusammensetzungen weitgehend frei von Geruchsträgem, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation in Schritt c) werden die erhaltenen wässrigen Polymer/Wirkstoffzusammensetzungen vor ihrer erfindungsgemäßen Verwendung häufig alkalisch, vorzugsweise auf pH-Werte im Bereich von 7 bis 10 eingestellt. Zur Neutralisation können Ammoniak oder organische Amine einsetzt, sowie vorzugsweise Hydroxide, wie Natriumhydroxid, Kaliumhydroxid oder Calciumhydroxid verwendet werden.

Auf diese Weise erhält man stabile, wässrige Wirkstoffzusammensetzungen, welche wenigstens einen Wirkstoff in partikulärer Form enthalten. In der Regel ist die Hauptmenge der Wirkstoffpartikel mit mindestens einer Schicht an Polymeren bzw. Copolymeren umhüllt, die sich von Monomeren M1 und den Monomeren M2 ableiten. Die Mehrheit der Wirkstoffpartikel in der erfindungsgemäß erhältlichen Wirkstoffzusammensetzung sind umhüllt mit zwei Schichten aus Polymeren bzw. Copolymeren, wobei die Schichten interpenetrierend sein können und nicht streng voneinander geschieden sein müssen. Die so charakterisierten Partikel werden im hier und im Folgenden auch als wirkstoffhaltige Polymerpartikel bezeichnet.

Gegenstand der Erfindung sind daher die durch das erfindungsgemäße Verfahren erhältlichen wässrigen Wirkstoffzusammensetzung.

Die erfindungsgemäßen Wirkstoffzusammensetzungen sind mit einer Reihe von Vorteilen verbunden. Zum einen handelt es sich um stabile wässrige Formulierungen von Wirkstoffen, die in Wasser nicht oder nur in geringem Ausmaß löslich sind. Insbesondere werden die bei konventionellen Formulierungen sowie bei Mikro- oder Nanodispersionen der Wirkstoffe beobachteten Phasentrennprobleme und ein Absetzen des Wirkstoffs nicht beobachtet, auch bei Anwendung drastischer Bedingungen wie sie in den für die Imprägnierung von Holz mit fungiziden Wirkstoffen angewendeten Prozessen auftreten. Der Gehalt an organischen flüchtigen Verbindungen ist bei üblicher Additivierung geringer als bei vergleichbaren konventionellen Formulierungen sowie im Vergleich zu Mikro- bzw. Nanodispersionen von Wirkstoffen. Gleichzeitig ist der Emulgatoranteil geringer. Die Auswaschung des Wirkstoffs aus behandelten Materialien bei Einwirkung von Wasser ist im Vergleich zu anderen Wirkstoffformulierungen deutlich herabgesetzt. Weiterhin werden Wechselwirkungen der Wirkstoffe mit anderen Formulierungsbestandteilen oder Co-Wirkstoffen, wie sie bei konventioneller Formulierung häufig auftreten, nicht beobachtet. Zudem wird der Abbau der Wirkstoffe durch Substrat- oder Umwelteinflüsse, wie pH-Wert des Milieus oder UV-Strahlung verlangsamt oder gar ganz unterbunden.

Eine verringerte Wirksamkeit des Wirkstoffs aufgrund der Umhüllung mit einem Polymer wird überraschenderweise nicht beobachtet. Vielmehr zeichnen sich die erfindungsgemäß erhältlichen wässrigen Wirkstoffzusammensetzungen durch eine Aktivität gegenüber den zu bekämpfenden Schadorganismen aus, die mit der Aktivität konventioneller Wirkstoffzubereitungen zumindest vergleichbar ist. Häufig erreicht man sogar bessere Aktivitäten, so dass die Einsatzmenge an Wirkstoff im Vergleich mit konventionellen Dispersionen verringert werden kann.

In einer bevorzugten Ausführungsform der Erfindung weisen die erfindungsgemäßen wässrigen Wirkstoffzusammensetzungen nicht mehr als 1 Gew.-%, insbesondere nicht mehr als 0,1 Gew.-% und speziell nicht mehr als 500 ppm, bezogen auf das Gesamtgewicht der Zusammensetzung an flüchtigen organischen Verbindungen auf. Flüchtige Verbindungen sind hier und im Folgenden alle organischen Verbindungen, die bei Normaldruck einen Siedepunkt unterhalb 200 °C aufweisen.

Die erfindungsgemäßen wässrigen Wirkstoffzusammensetzungen enthalten herstellungsbedingt oberflächenaktive Substanzen. Die Gesamtmenge an oberflächenaktiver Substanz in der Zusammensetzung liegt üblicherweise im Bereich von 0,1 bis 20 Gew.-%, insbesondere 0,5 bis 15 Gew.-% und besonders bevorzugt im Bereich von 1 bis 10 Gew.-%, bezogen auf die Gesamtmenge an Wirkstoff und Polymer.

Der Feststoffgehalt der erfindungsgemäßen Zusammensetzungen wird in erster Näherung durch den Wirkstoff und das Polymerisat bestimmt und liegt in der Regel im Bereich von 10 bis 60 Gew.-% und insbesondere im Bereich von 20 bis 50 Gew.-%.

Der Wirkstoffgehalt in den erfindungsgemäßen Zusammesetzungen liegt üblicherweise im Bereich von 0,1 bis 30 Gew.-%, vorzugsweise im Bereich von 0,5 bis 20 Gew.-%, bezogen auf das Gesamtgewicht der Zusammensetzung.

Die erfindungsgemäßen wässrigen Zusammensetzungen sind üblicherweise niedrigviskos, d. h. ihre Viskosität nach Brookfield beträgt bei 25°C in der Regel nicht mehr als 1000 mPa.s und liegt insbesondere im Bereich von 10 bis 200 mPa.s.

Die so erhältlichen Wirkstoffzusammensetzungen können als solche oder nach Verdünnung direkt eingesetzt werden. Außerdem können die erfindungsgemäßen Zusammensetzungen noch übliche Zusatzstoffe (Additive) enthalten, z. B. die Viskosität verändernde Additive (Andicker, Verdicker), Antischaummittel, Bakterizide und Frostschutzmittel.

Geeignete Verdicker sind Verbindungen, die der Formulierung ein pseudoplastisches Fließverhalten verleihen, d. h. hohe Viskosität im Ruhezustand und niedrige Viskosität im bewegten Zustand. Hier sind beispielsweise handelsübliche Verdicker auf Basis von Polysacchariden wie Xanthan Gum® (Kelzan® der Fa. Kelco), Rhodopol® 23 (Rhone Poulenc) oder Veegum® (Firma R.T. Vanderbilt) sowie organisch modifizierte Schichtmineralien wie Attaclay® (Firma Engelhardt) zu nennen, wobei Xanthan-Gum® bevorzugt verwendet wird.

Als für die erfindungsgemäßen Dispersionen geeignete Antischaummittel kommen beispielsweise Silikonemulsionen (wie z. B. Silikon® SRE, Firma Wacker oder Rhodorsil® der Firma Rhodia), langkettige Alkohole, Fettsäuren, fluororganische Verbindungen und deren Gemische in Betracht.

Bakterizide können zur Stabilisierung den erfindungsgemäßen Zusammensetzungen gegen Befall mit Mikroorganismen zugesetzt werden. Geeignete Bakterizide sind beispielsweise solche auf Basis von Isothiazolonen wie die unter den Handelsbezeichungen Proxel® der Fa. Avecia (bzw. Fa. Arch) oder Acticide® RS der Fa. Thor Chemie und Kathon® MK der Firma Rohm & Haas vertriebenen Produkte.

Geeignete Frostschutzmittel sind organische Polyole, z. B. Ethylenglycol, Propylenglycol oder Glycerin. Diese werden üblicherweise in Mengen von nicht mehr als 10 Gew.-%, bezogen auf das Gesamtgewicht der Wirkstoffzusammensetzung eingesetzt.

Gegebenenfalls können die erfindungsgemäßen Wirkstoffzusammensetzungen 1 bis 5 Gew.-% Puffer, bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Daneben können die erfindungsgemäßen wässrigen Wirkstoffzusammensetzungen mit konventionellen Bindemitteln, beispielsweise wässrigen Polymerdispersionen, wasserlöslichen Harzen, beispielsweise wasserlöslichen Alkydharzen, oder mit Wachsen formuliert werden.

Die erfindungsgemäßen Zusammensetzungen können auch mit konventionellen wässrigen Wirkstoffzusammensetzungen des gleichen Wirkstoffs oder eines anderen Wirkstoffs formuliert werden. Hierdurch erreicht man häufig eine Verbesserung der Stabilität der konventionellen wässrigen Wirkstoffzusammensetzung.

Die erfindungsgemäßen wässrigen Wirkstoffzusammensetzungen können nach oder insbesondere vor einer Konfektionierung mit Additiven durch übliche Trocknungsmethoden, insbesondere durch Sprüh- oder Gefriertrocknung in pulverförmige Wirkstoffzusammensetzungen überführt werden. Gegenstand der Erfindung sind daher auch solche Pulverförmigen Wirkstoffzusammensetzungen.

Vorzugsweise setzt man den erfindungsgemäßen wässrigen Wirkstoffzusammensetzungen vor dem Trocknen ein Trocknungs- bzw. Sprühilfsmittel zu. Trocknungs- bzw. Sprühhilfsmittel sind zum Trocknen wässriger Polymerdispersionen bekannt. Hierzu zählen insbesondere die vorgenannten Schutzkolloide, beispielsweise Polyvinylalkohol, vorzugsweise mit einem Hydrolysegrad > 70%, carboxylierter Polyvinylalkohol, Phenolsulfonsäure-Formaldehyd-Kondensationsprodukte, Phenolsulfonsäure-Harnstoff-Formaldehyd-Kondensationsprodukte, Naphthalinsulfonsäure-Formaldehyd-Kondensationsprodukte, Naphthalinsulfonsäure-Formaldehyd-Harnstoff-Kondensationsprodukte, Polyvinylpyrrolidon, Maleinsäure(anhydrid)-Styrol-Copolymere und deren ethoxylierte Derivate, Copolymere von Maleinsäu-

reanhydrid mit $C_2$-$C_{10}$-Olefinene wie Diisobuten und deren ethoxylierte Derivate, kationische Polymere z.B. Homo- und Copolymere von N-Alkyl-N-vinylimidazoliniumverbindungen mit N-Vinyllactamen und dergleichen, sowie anorganische Antiblockmittel wie Kieselsäure, Aluminiumoxid und dergleichen. Üblicherweise werden die Trocknungshilfsmittel in einer Menge von 0,1 bis 20 Gew.-%, bezogen auf die Masse der Wirkstoffpartikel in der wässrigen Wirkstoffzusammensetzung eingesetzt.

Die so erhaltenen pulverförmigen Wirkstoffzusammensetzungen sind üblicherweise in Wasser redispergierbar und weisen die gleichen Vorteile auf wie die wässrigen Wirkstoffzusammensetzungen. Die erfindungsgemäßen pulverförmigen Wirkstoffzusammensetzungen sind in gleicher Weise wie die wässrigen Wirkstoffzusammensetzungen für den Pflanzen- und Materialschutz geeignet, so dass die folgenden Ausführungen zur Anwendung der erfindungsgemäßen wässrigen Wirkstoffzusammensetzungen sinngemäß auch für die erfindungsgemäßen pulverförmigen Wirkstoffzusammensetzungen gilt. Die erfindungsgemäßen pulverförmigen Zusammensetzungen können dabei je nach Anwendungsgebiet als solche, in Form wässriger Resuspendate oder zusammen mit einem festen Trägermaterial angewendet werden. Feste Trägermaterialienen umfassen z. B. Mineralerden, wie Kieselgele, hochdisperse Kieselsäure, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die erfindungsgemäßen Wirkstoffzusammensetzungen sind für zahlreiche Anwendungszwecke geeignet, wobei man den in der Zusammensetzung enthaltenen Wirkstoff in erster Linie im Hinblick auf den gewünschten Anwendungszweck auswählt.

Die erfindungsgemäßen Zusammensetzungen können grundsätzlich in allen Bereichen des Pflanzenschutzes und des Materialschutzes zur Bekämpfung von Schadorganismen oder zur Förderung des Pflanzenwuchses eingesetzt werden. Sofern die erfindungsgemäßen Zusammensetzungen ein Herbizid enthalten, können sie in Analogie zu bekannten Formulierungen von herbiziden Wirkstoffen zur Bekämpfung von Schadpflanzen, insbesondere Schadgräsem eingesetzt werden. Sofern die erfindungsgemäßen Zusammensetzungen einen fungiziden Wirkstoff enthalten, können sie zur Bekämpfung von Schadpilzen im Pflanzenschutz und im Materialschutz eingesetzt werden. Sofern die erfindungsgemäßen Zusammensetzungen ein Insektizid, Akarizid oder Nematizid enthalten, können sie sowohl zum Schutz von Pflanzen als auch von Materialien gegen einen Befall mit derartigen tierischen Schädlingen eingesetzt werden. Auch können befallene Pflanzen und Materialen mit den erfindungsgemäßen Zusammensetzungen behandelt werden, wodurch die schädigenden Organismen zerstört oder zumindest im Wachstum so gehemmt werden, dass von ihnen keine Schädigung ausgeht. Entsprechendes gilt für erfindungsgemäße Zusammensetzungen, die Algizide, Bakterizide oder sonstige Biozide enthalten. Die Art des Wirkstoffs in der Zusammensetzung richtet sich in an sich bekannter Weise nach dem zu bekämpfenden Schadorganismus.

Insbesondere eignen sich solche erfindungsgemäßen Wirkstoffzusammensetzungen, die ein Fungizid, Bakterizid, ein sonstiges Biozid und/oder ein Insektizid enthalten, in den verschiedensten Bereichen des Materialschutzes gegen Befall mit Schadpilzen oder tierischen Schädlingen. Beispielsweise können cellulosehaltige Materialien wie Holz sowie Häute, Felle, Leder, Textilien, Vliese und dergleichen mit den erfindungsgemäßen Zusammensetzungen wirksam gegen einen Befall mit Mikroorganismen, insbesondere gegen einen Befall mit den vorgenannten Schadpilzen, Bakterien, sonstige Mikroorganismen und/oder gegen Befall mit tierischen Schädlingen geschützt werden. Ferner können die erfindungsgemäßen Zusammensetzungen auch als Anti-Fouling-Anstriche, beispielsweise im Schiffbau, oder als algizide Anstrichsysteme für Fassaden und Dachziegel verwendet werden, abhängig von dem jeweils darin enthaltenen Wirkstoff. Außerdem können die erfindungsgemäßen Zusammensetzungen als Topf- und Filmkonservierungsmittel verwendet werden. Dementsprechend betrifft eine bevorzugte Ausführungsform der Erfindung solche Wirkstoffzusammensetzungen, die als Wirkstoff wenigstens ein Fungizid und/oder Insektizid enthalten.

Die erfindungsgemäßen Wirkstoffzusammensetzungen, die als Wirkstoff wenigstens ein Fungizid und/oder Insektizid enthalten, eignen sich in besonderem Maß zum Schutz cellulosehaltiger Materialien vor einem Befall mit Schadorganismen, insbesondere für den Holzschutz.

Im Hinblick auf die Verwendung der erfindungsgemäßen Zusammensetzungen zum Schutz cellulosehaltiger Materialien vor Befall mit im Holzschutz relevanten Mikroorganismen - vor allem Schimmelpilze, holzverfärbende und holzzerstörende Pilze - sind insbesondere solche Fungizide bevorzugt, die beispielsweise gegenüber den folgenden Gruppen von Mikroorganismen wirksam sind:

Holzverfärbende Pilze:

- Ascomyceten wie Ophiostoma sp. (z. B. Ophiostoma piceae, Ophiostoma piliferum), Ceratocystis sp. (z. B. Ceratocystis coerulescens), Aureobasidium pullulans, Sclerophoma sp. (z. B. Sclerophoma pityophila);
- Deuteromyceten wie Aspergillus sp. (z. B. Aspergillus niger), Cladosporium sp. (z. B. Cladosporium sphaerospermum), Penicillium sp. (z. B. Penicillium funiculosum), Trichoderma sp. (z. B. Trichoderma viride), Alternaria

sp. (z. B. Alternaria alternata), Paecilomyces sp. (z. B. Paecilomyces variotii);
- Zygomyceten wie Mucor sp. (z. B. Mucor hiemalis);

Holzzerstörende Pilze:

- Ascomyceten wie Chaetomium sp. (z. B. Chaetomium globosum), Humicola sp. (z. B. Humicola grisea), Petriella sp. (z. B. Petriella setifera), Trichurus sp. (z. B. Trichurus spiralis);
- Basidiomyceten wie Coniophora sp. (z. B. Coniophora puteana), Coriolus sp. (z. B. Coriolus versicolor), Gloeophyllum sp. (z. B. Gloeophyllum trabeum), Lentinus sp. (z. B. Lentinus lepideus), Pleurotus sp. (z. B. Pleurotus ostreatus), Poria sp. (z. B. Poria placenta, Poria vaillantii), Serpula sp. (z. B. Serpula lacrymans) und Tyromyces sp. (z. B. Tyromyces palustris),

Bevorzugte Wirkstoffe sind daher aus der Gruppe der Conazole, der Gruppe der Strobilurine, der Gruppe der Thiazole, der Gruppe der Sulfenamide und der Gruppe der Iodverbindungen ausgewählt.

Bevorzugt sind insbesondere solche Fungizide, die in der Biozidverordnung der Europäischen Union (VERORDNUNG (EG) Nr. 2032/2003 DER KOMMISSION vom 4. November 2003) in der Klasse 08 (Holzschutzmittel) genannt sind.

Im Hinblick auf die Verwendung der erfindungsgemäßen Zusammensetzungen zum Schutz cellulosehaltiger Materialien vor Befall mit im Holzschutz relevanten tierischen Schädlingen sind solche Insektizide bevorzugt, die gegen holzzerstörende Insekten und insbesondere gegen die folgenden holzzerstörenden Insekten wirksam sind:

Ordnung Coleoptera (Käfer):

- Cerambycidae wie Hylotrupes bajulus, Callidium violaceum;
- Lyctidae wie Lyctus linearis, Lyctus brunneus;
- Bostrichidae wie Dinoderus minutus;
- Anobüdae wie Anobium punctatum, Xestobium rufovillosum;
- Lymexylidae wie Lymexylon navale;
- Platypodidae wie Platypus cylindrus;
- Oedemeridae wie Nacerda melanura.

Ordnung Hymenoptera (Hautflügler):

- Formicidae wie Camponotus abdominalis, Lasius flavus, Lasius brunneus, Lasius fuliginosus;

Ordnung Isoptera (Termiten):

- Calotermitidae wie Calotermes flavicollis, Cryptothermes brevis;
- Hodotermitidae wie Zootermopsis angusticollis, Zootermopsis nevadensis;
- Rhinotermitidae wie Reticulitermes flavipes, Reticulitermes lucifugus, Coptotermes formosanus, Coptotermes acinacifomnis;
- Mastotermitidae wie Mastotermes darwiniensis.

Hierzu zählen insbesondere die insektiziden Wirkstoffe aus der Klasse der Pyrethroide arthropode Wachstumsregulatoren, wie Chitinbiosyntheseinhibitoren, ecdysone Antagonisten, Juvenoide, Lipidbiosynthese-Inhibitoren, Neonicotinoide, Pyrazol-Insektizide sowie Chlorfenapyr. Dementsprechen betreffen bevorzugte Ausführungsformen solche erfindungsgemäßen Wirkstoffzusammensetzungen, die wenigstens einen der vorgenannten insektiziden Wirkstoffe enthalten.

Bevorzugt sind insbesondere solche Insektiziden Wirkstoffe, die in der Biozidverordnung der Europäischen Union (VERORDNUNG (EG) Nr. 2032/2003 DER KOMMISSION vom 4. November 2003) in den Klassen 08 (Holzschutzmittel) und 18 (Insektizide, Akarizde und Substanzen zur Kontrolle anderer Arthropden) genannt sind.

Für den Holzschutz können die erfindungsgemäßen Wirkstoffzusammensetzungen auch mit klassischen wasserlöslichen Holzschutzmitteln, insbesondere mit deren wässrigen Lösungen, formuliert werden, um die Gesamtwirksamkeit gegen holzzerstörende Organismen zu verbessern. Hierbei handelt es sich beispielsweise um wässrige Zubereitungen konventioneller Holzschutzsalze, beispielsweise von Salzen auf Basis von Borsäure und Alkaliboraten, auf Basis von quaternären Ammoniumverbindungen, z. B. Trimethyl- und Triethyl-$C_6$-$C_{30}$-alkylammoniumsalze wie Cocotrimethylammoniumchlorid, Trimethylcetylammoniumsalze, Dimethyl- und Diethyl-di-$C_4$-$C_{20}$-alkylammoniumsalze wie Didecyldimethylammoniumchlorid- und -bromid, Dicocodimethylammoniumchlorid, $C_1$-$C_{20}$-Alkyl-di-$C_1$-$C_4$-alkylbenzylam-

moniumsalze wie Cocobenzyldimethylammoniumchlorid, Methyl- und Ethyl-di-$C_4$-$C_{20}$-alkylpoly(oxyethyl)ammoniumsalze, z. B. Didecylmethylpoly(oxyethyl)ammoniumchlorid und propionat sowie die Borate, Carbonate, Formiate, Acetate, Hydrogencarbonate, Sulfate und Methosulfate, wässrige Zubereitungen von Kupfer-Amin-Komplexen, insbesondere wässrige Zubereitungen von Kupferethanolamin-haltigen Salzen, beispielsweise Cu-HDO. Selbstverständlich können die erfindungsgemäßen wässrigen Wirkstoffzusammensetzungen auch mit anderen wässrigen herbiziden, fungiziden, insektiziden akariziden, nematiziden oder sonstigen Wirkstoffformulierungen formuliert werden, beispielsweise mit konventionellen Emulsionskonzentraten, Suspensionskonzentraten, Suspoemulsionskonzentraten der vorgenannten Wirkstoffe, z. B. der vorgenannten Fungizide aus der Gruppe der Azole und der Strobilurine, oder der vorgenannten Insektizide, oder mit den eingangs erwähnten Mikroemulsionen der vorgenannten Fungizide und Insektizide. Durch das Abmischen der erfindungsgemäßen Wirkstoffzusammensetzung mit konventionellen wässrigen Zubereitungen der vorgenannten Wirkstoffe erzielt man zum einen eine Verbreiterung des Wirkspektrums, wenn die konventionelle Zubereitung einen anderen Wirkstoff enthält als die erfindungsgemäße Wirkstoffzusammensetzung. Zum anderen gehen die Vorteile der erfindungsgemäßen Wirkstoffzusammensetzungen durch das Formulieren mit konventionellen wässrigen Wirkstoffzubereitungen, insbesondere die verbesserte Haftung an cellulosehaltigen Materialien und speziell an Holz nicht verloren. Folglich kann man die Anwendungseigenschaften einer konventionellen wässrigen Wirkstoffzubereitung durch Formulierung mit einer erfindungsgemäßen Wirkstoffzusammensetzung des gleichen Wirkstoffs verbessern.

Die vorliegende Erfindung betrifft auch ein Verfahren zum Schutz cellulosehaltiger Materialien, insbesondere Holz, gegen den Befall mit Schadpilzen, insbesondere gegen den Befall mit den oben erwähnten holzschädigenden Pilzen, bei dem man das cellulosehaltige Material, insbesondere Holz, mit einer erfindungsgemäßen Zusammensetzung behandelt.

Cellulosehaltige Materialien sind neben Holz und Folgeprodukten, z. B. Holzzuschnitte, Sperrholz, Spanplatten, MDF-Platten, OSB-Platten, weiterhin Zellstoffe und Zwischenprodukte bei der Papierherstellung, Gewebe auf Cellulosebasis wie Baumwolle, Materialien auf Basis verholzter Einjahrespflanzen, beispielsweise Formkörper aus Rapsschäben, Bargasseplatten, Strohplatten etc. Zu den cellulosehaltigen Materialien zählen weiterhin Gegenstände aus cellulosehaltigen Fasermaterialien wie Gewebe, Vliesstoffe, Papier, Pappe, Wärmedämmmaterialien, Seile, Taue etc. Geeignete Fasermaterialien für das erfindungsgemäße Verfahren umfassen Textilfasern wie Flachs, Leinen, Hanf, Jute, Baumwolle und Chinagras, Papierfasern wie Flachs, Leinen, Hanf, Bambusfasern, Fasern aus Papiermaulbeerbaum und Holzzellstoff, weiterhin Nesselfaser, Manilahanf, Sisal, Kenaf und Kokosfaser.

Das Behandeln kann in an sich bekannter Weise je nach Art des Substrats durch Besprühen, Streichen, Tauchen oder Tränken des Substrats mit einer unverdünnten oder einer mit Wasser verdünnten erfindungsgemäßen Wirkstoffzusammensetzung oder durch Fluten des Substrats in einer unverdünnten oder mit Wasser verdünnten erfindungsgemäßen wässrigen Wirkstoffzusammensetzung erfolgen. Die erfindungsgemäßen Zusammensetzungen können auch bei der Herstellung des cellulosehaltigen Materials, beispielsweise als Binder oder als Leimungsmittel, zugegen sein.

Sofern es sich bei dem erfindungsgemäßen Substrat um Holz handelt, kann man die im Holzschutz üblichen Verfahren einsetzen, wie sie beispielsweise aus Ullmann's Encyclopedia of Industrial Chemistry, Wood preservation, 5. Auflage auf CD-ROM, Wiley VCH, Weinheim, 1997, Kapitel 7, bekannt sind. Hierzu zählen insbesondere Verfahren zur Tränkung des Holzes mit Hilfe von Druckunterschieden, z. B. das Kesseldruckverfahren sowie die Doppelvakuumtränkung.

Das Behandeln derartiger Materialien mit den erfindungsgemäßen Wirkstoffzusammensetzungen kann nach den hierfür üblichen Verfahren erfolgen und wird an die jeweils technischen Gegebenheiten in an sich bekannter Weise angepasst werden. Die Anwendungskonzentration und das Einbringen hängt dabei vom Gefährdungsgrad des Materials sowie von dem jeweiligen Behandlungsverfahren ab und liegt üblicherweise im Bereich von 0,05 mg bis 10 g Wirkstoff pro kg Material.

Bei Holzfolgeprodukten und Cellulose enthaltenden Materialien wird man häufig die unverdünnte wirkstoffhaltige Zusammensetzung einsetzen, beispielsweise zusammen mit dem verwendeten Bindemittel als Cobindemittel. Selbstverständlich ist auch ein separates Behandeln während oder nach der Herstellung, beispielsweise der Beleimung, möglich.

Die folgenden Beispiele sollen die Erfindung verdeutlichen, ohne sie jedoch einzuschränken:

Die angegebenen Viskositäten wurden in einem Rotationsviskosimeter nach Brookfield in Anlehnung an ISO 2555 bei 23 °C ermittelt.

Die angegebenen Teilchengrößen wurden durch dynamische Lichtstreuung nach den oben beschriebenen Methoden an verdünnten Dispersionen (0,01 bis 0,1 gew.-%ig) bestimmt. Angegeben wird der mittlere Durchmesser, welcher durch der Kumulantenauswertung der gemessenen Autokorrelationsfunktion bestimmt wurde.

Die Glasübergangstemperatur wurde in Anlehnung an ASTM-D3418 mittels Differentialkalorimetrie bestimmt.

Beispiele

Allgemeine Herstellungsvorschrift:

a) Herstellung einer wässrigen Suspension von Wirkstoffpartikeln:

In einer Kugelmühle Drais Superflow DCP SF 12 wurden die folgenden Bestandteile miteinander vermahlen:

| | |
|---|---|
| 125 g | Wirkststoff |
| 224,9 g | einer wässrigen 20 gew.-%igen Lösung von ethoxiliertem Stearylalkohol mit einem Ethoxylierungsgrad von 25 |
| 0,1 g | destilliertes Wasser |

Das Vermahlen wurde fortgesetzt, bis die Pigmentpartikel einen mittleren Durchmesser von 100 nm aufwiesen (Aufgrund von Aggregatbildung wurde zunächst ein mittlerer Teilchendurchmesser von 800-900 nm gemessen).

In einem geeigneten Reaktionsgefäß wurden 25,7 g der so erhaltenen Wirkstoffzubereitung mit 50 g destilliertem Wasser unter Rühren dispergiert.

b) Polymerisation der Monomere M1:

Zu der in Schritt a) hergestellten Wirkstoffsuspension gab man 1,1 g Emulgatorlösung 1 (40 gew.-%ig), 6 g Styrol (S), 2 Tropfen Ameisensäure, 0,03 g Natriumhydroxymethansulfinat und 0,04 g einer 70 gew.-%igen wässrigen tert.-Butylhydroxid-Lösung und erhitzte anschließend auf 85 °C und behielt die Temperatur 5 min. bei.

c) Polymerisation der Monomere M2:

5 Minuten nach der Zugabe von tert.-Butylhydroperoxid und Natriumhydroxymethansulfinat gab man über einen Zeitraum von 60 Minuten eine wässrige Emulsion der Monomere M2 zu, welche pH 4 sowie die folgende Zusammensetzung aufwies:

40 g vollentsalztes Wasser
2,3 g einer 40 gew.-%igen wässrigen Lösung von ethoxiliertem Oleylamin mit einem ethoxilierungsgrad von 11-12 (= Emulgatorlösung 1)
6,6 g einer 56,5 Gew.-% wässsrige Lösung von Natrium-(di-2-ethylhexylsuccinat)-sulfonat (Natriumsalz von Sulfobemsteinsäuredi-2-ethylhexylester)
0,6 g Acrylsäure (AS)
2,7g Dimethylaminopropylmethacrylamid (DMAPMAM)
13,8 g Methylmethacrylat (MMA)
4,5 g n-Butylacrylat (n-BA)
8,4 g Ethylacrylat, und (EA)
ca 1 ml Ameisensäure

Gleichzeitig gab man über einen Zeitraum von 75 min. eine Lösung von 0,6 g Azobisisobutyramidindihydrochlorid in 25 g Wasser zu und rührte nach Beendigung der Zugabe weitere 15 min. unter Beibehaltung der Temperatur.

Man erhielt eine wässrige Dispersion, enthaltend Epoxiconazole. Der Feststoffgehalt betrug 23,9 Gew.%. Die Teilchengrößenverteilung der Wirkstoff-Polymerteilchen hate ein Maximum bei 127 nm (bestimmt mit Hilfe eines Geräts Autosizer IIC der Fa. Malvem nach ISO 13321). Das Polymerisat wies eine Glasübergangstemperatur bei -1 °C auf.

In analoger Weise wurden die in Tabelle 1 angegebenen Dispersionen der Beispiele 2 bis 6 hergestellt:

Tabelle 1:

| Beispiel | Wirkstoff (Polymer/ Wirkstoff)[1)] | Monomere in Schritt c [pphm][2] | Teilchengröße [nm] | FG[3)] [Gew.%) | Tg[4)] [°C] |
|---|---|---|---|---|---|
| 1 | Epoxiconazole(4:1) | n-BA 15; MMA 46; EA 28; AS 2; DMAPMAM 9 | 127 | 23,9 | -1 |
| 2 | Epoxiconazole (4:1) | MMA 95; DMAEMA 5 | 78 | 21,0 | 110 |

(fortgesetzt)

| Beispiel | Wirkstoff (Polymer/ Wirkstoff)1) | Monomere in Schritt c [pphm]2 | Teilchengröße [nm] | FG3) [Gew.%) | Tg4) [°C] |
|---|---|---|---|---|---|
| 3 | Chlorfenapyr (10:1) | BA: 15; MMA: 50; EA: 33; AS: 2; | 64 | 28,0 | 17 |
| 4 | Chlorfenapyr (5:1) | BA: 15; MMA 50; EA 28; AS: 2; DMAP-MAM 5 | 130 | 36,0 | 8 |
| 5 | α-Cypermethrin (4:1) | n-BA 15; MMA 46; EA 28; AS 2; DMAP-MAM 9 | 127 | 23,9 | -1 |
| 6 | α-Cypermethrin (3:1) | BA: 15; MMA: 50; EA: 33; AS: 2; | 64 | 28,0 | 17 |

1) Gewichtsverhältnis von Polymer zu Wirkstoff
2) Angaben in Gew.-Teile auf 100 Gew.-Teile Gesamtmonomer; nBMA = n-Butylmethacrylat, BA = n-Butylacrylat, EA = Ethylacrylat, AS = Acrylsäure, DMAPMAM = 3-(Dimethylamino)propylmethacrylamid, DMAEMA = 2-Dimethylaminoethylmethacrylat.
3) FG = Feststoffgehalt
4) Glasübergangstemperatur

Anwendungstechnische Prüfung:

Insektizide Wirksamkeit

Die insektizide Wirkung der Verbindungen ließ sich durch den folgenden Versuch zeigen:

Die erfindungsgemäße wässrige Wirkstoffzusammensetzung aus Beispiel 5 wurde mit Wasser auf drei unterschiedliche Wirkstoffkonzentrationen verdünnt. Zu Vergleichszwecken wurde α-Cypermethrin in Aceton gelöst und die Lösung mit weiterem Aceton auf die entsprechenden Wirkstoffkonzentrationen verdünnt.

Zur Bestimmung der Wirksamkeitsgrenzen der erfindungsgemäßen Zusammensetzung gegenüber holzzerstörenden Bodentermiten (*Reticulitermes santonensis*) wurden Holzproben aus *Pinus* spp. mit den Abmessungen 25 x 25 x 6 $mm^3$ (Southern Yellow Pine) nach dem amerikanischen Prüfstandard AWPA E1-97 (siehe hierzu "Standard method for laboratory evaluation to determine resistance to subterranean termites", American Wood-Preservers' Association, 2001) im Zwangsversuch nach Auswaschbeanspruchung gemäß DIN EN 84: 1997-01 untersucht (siehe hierzu "beschleunigte Alterung von behandeltem Holz vor biologischen Prüfungen", Europäisches Komitee für Normung).

Die durch den Termitenangriff bewirkte Zerstörung des Holzes wurde nach 4-wöchiger Prüfzeit durch eine visuelle Bonitierung der Probehölzer gemäß AWPA E1-97 erfasst. Darüber hinaus wurde die Mortalitätsrate unter den Termiten abgeschätzt.

Wenn die Probehölzer noch intakt waren (Bewertung mit 10 "sound, surface nibbles permitted" auf einer Skala von 10 bis 0) wird der durch das Schutzmittel bei einer bestimmten Wirkstoffkonzentration erreichte Schutz des Holzes als ausreichend angesehen.

Für die erfindungsgemäße wässrige Wirkstoffzusammensetzung wurde ein Grenzwert für α-Cypermethrin nach Auswaschung von 9-21 $g/m^3$ bestimmt. Dabei gibt die niedrigere Konzentration den Wert an, bei dem das Holz nicht mehr ausreichend geschützt ist (im vorliegenden Fall Bewertung 7 "moderate attack, penetration") und die höhere Konzentration entspricht der Mindestkonzentration, mit der ein vollständiger Schutz erreicht wird. Für den zu Vergleichszwecken in reinem Aceton gelösten Wirkstoff lag der Grenzwert nach Auswaschung oberhalb 21 $g/m^3$.

Fungizide Wirksamkeit

Die Grenzen der Wirksamkeit der erfindungsgemäßen Zusammensetzung aus Beispiel 1 gegenüber holzzerstörenden Basidiomyceten wurde nach der Agar-Block Methode an Holzproben aus Pinus spp. (Southern Yellow Pine) mit den Abmessungen 40 x 15 x 4 $mm^3$ bestimmt. Die als sog. Bravery Test bekannte Prüfmethode an verkleinerten Holzproben ist eng an EN 113 angelehnt und dient zur Bestimmung der vorbeugenden Wirkung von Holzschutzmitteln gegen holzzerstörende Pilze (siehe hierzu A. F. Bravery, Intern. Res. Group Wood Pres., Doc. No. IRG/WP/2113, 5S., Stockholm 1978). Zu Vergleichszwecken wurde unter den gleichen Bedingungen eine Lösung von Epoxyconazol in Aceton getestet.

Die mit der erfindungsgemäßen Zusammensetzung imprägnierten Holzproben wurden ohne bzw. mit Auswaschbeanspruchung nach EN 84 getestet. Die Prüfung erfolgte mit vier unterschiedlichen Wirkstoffkonzentrationen und jeweils 5 Parallelproben je Wirkstoffkonzentration und Prüfpilz. Als Prüfpilze dienten *Coniophora puteana* BAM Ebw. *15, Poria placenta* FPRL 280 und *Coriolus versicolor* CTB 863A. Die durch den Pilzbefall bewirkte Zerstörung des Holzes wurde durch den Masseverlust der Probehölzer erfasst, der nach 6 Wochen bestimmt wurde. Wenn der Masseverlust weniger als 3 Gew.-%, bezogen auf die Anfangstrockenmasse des Prüfkörpers beträgt, wird der durch das Schutzmittel bei einer bestimmten Wirkstoffkonzentration erreichte Schutz des Holzes als ausreichend angesehen. Die Konzentrationsgrenze der Wirksamkeit wird in zwei Konzentrationen angegeben. Die niedrigere Konzentration gibt den Wert an, bei dem das Holz nicht mehr ausreichend geschützt ist und die höhere Konzentration entspricht der Mindestkonzentration, mit der ein vollständiger Schutz erreicht wird.

Die Grenzen der Wirksamkeit sind in Tabelle 2 dargestellt. Zum Vergleich sind die für eine Lösung des Wirkstoffes in Aceton ermittelten Werte angegeben.

Tabelle 2:

| Prüfpilz | Grenzen der Wirksamkeit [g/m$^3$] | |
|---|---|---|
| Dispersion mit Epoxiconazol* | Ohne Auswaschung | Mit Auswaschung |
| C. puteana | > 41 | > 41 |
| P. placenta | 41-66 | 41-66 |
| C. versicolor | > 41 | > 41 |
| Lösung von Epoxiconazol** | | |
| C. puteana | < 190 | 110-160 |
| P. placenta | < 190 | 110-180 |
| *Beispiel 1<br>**Lösung in Aceton | | |

Für die Bewertung eines Holzschutzmittels in der Praxis ist insbesondere der obere Wert nach Auswaschung maßgeblich. Die in Tabelle 2 dargestellten Ergebnisse belegen, dass die erfindungsgemäße Wirkstoffzusammensetzung eine bessere Wirksamkeit gegen holzzerstörende Pilze zeigt als die Formulierung in organischem Lösungsmittel.

## Patentansprüche

1. Verfahren zur Herstellung wässriger Wirkstoffzusammensetzung für den Pflanzen- oder Materialschutz, umfassend die folgenden Schritte:

    a) Bereitstellung einer wässrigen Suspension von festen Wirkstoffpartikeln wenigstens eines Wirkstoffs mit einer Wasserlöslichkeit von nicht mehr als 5 g/l bei 25 °C/1013 mbar, enthaltend zur Stabilisierung der Wirkstoffpartikel wenigstens eine oberflächenaktive Substanz, wobei die Wirkstoffpartikel in der Suspension eine mittlere Teilchengröße, bestimmt durch dynamische Lichtstreuung, von nicht mehr als 1200 nm, aufweisen,
    b) Emulsionspolymerisation einer ersten Monomerzusammensetzung M1 in der wässrigen Suspension des Wirkstoffs, wobei die Monomerzusammensetzung M1 wenigstens 95 Gew.-%, bezogen auf ihr Gesamtgewicht, wenigstens eines neutralen, monoethylenisch ungesättigten Monomeren M1.1 mit einer Wasserlöslichkeit von nicht mehr als 30 g/l bei 25°C/1013 mbar umfasst, wobei man eine wässrige Dispersion von Polymer-Wirkstoff-Partikeln erhält, und
    c) Emulsionspolymerisation einer zweiten Monomerzusammensetzung M2 in einer wässrigen Dispersion der in Schritt b) erhaltenen Polymer-Wirkstoffpartikel, wobei die Monomerzusammensetzung M2 wenigstens 60 Gew.%, bezogen auf ihr Gesamtgewicht, wenigstens eines neutralen, monoethylenisch ungesättigten Monomeren M2.1 mit einer Wasserlöslichkeit von nicht mehr als 30 g/l bei 25°C/1013 mbar umfasst.

2. Verfahren nach Anspruch 1, wobei der Wirkstoff W bei einer Temperatur von 50°C ein Feststoff ist.

3. Verfahren nach Anspruch 1 oder 2, wobei die wässrige Suspension von festen Wirkstoffpartikeln wenigstens eine nichtionische oberflächenaktive Substanz umfasst.

**4.** Verfahren nach Anspruch 3, wobei das Gewichtsverhältnis von nichtionischer oberflächenaktiver Substanz zu Wirkstoff im Bereich von 2:1 bis 1:50 liegt.

**5.** Verfahren nach einem der vorhergehenden Ansprüche, wobei die Suspension der festen Wirkstoffpartikel in Schritt a) bereitstellt, indem man festen Wirkstoff in einer Mischung des Wirkstoffs mit der oberklächenaktiven Substanz zerkleinert und anschließend die so erhaltene Mischung in einem wässrigen Medium dispergiert.

**6.** Verfahren nach einem der vorhergehenden Ansprüche, wobei die Monomerzusammensetzung M1 einem Polymerisat 1 mit einer theoretischen Glasübergangstemperatur nach Fox von wenigstens 50°C entspricht.

**7.** Verfahren nach einem der vorhergehenden Ansprüche, wobei wenigstens 70 Gew.-% der Monomere M1.1 ausgewählt sind unter vinylaromatischen Monomeren, Estern der Methacrylsäure mit $C_2$-$C_4$-Alkanolen und tert.-Butylacrylat.

**8.** Verfahren nach einem der vorhergehenden Ansprüche, wobei das Gewichtsverhältnis von Wirkstoff zu den Monomeren in der Monomerzusammensetzung M1 im Bereich von 10:1 bis 1:50 liegt.

**9.** Verfahren nach einem der vorhergehenden Ansprüche, wobei man wenigstens 70 Gew.-% der Monomere M1 in der wässrigen Suspension des Wirkstoffs vorlegt und anschließend die Polymerisation in der so erhaltenen Monomer/ Wirkstoff Emulsion auslöst.

**10.** Verfahren nach einem der vorhergehenden Ansprüche, wobei die Polymerisation in Schritt b) in Gegenwart eines anionischen Emulgators durchgeführt wird.

**11.** Verfahren nach einem der vorhergehenden Ansprüche, wobei man man die Polymerisation der Monomere M1 durch einen Redoxinitiator auslöst.

**12.** Verfahren nach einem der vorhergehenden Ansprüche, wobei das Gewichtsverhältnis der Gesamtmenge der Monomermischungen M1 und M2 zu Wirkstoff im Bereich von 1 : 9 bis 100 : 1 liegt.

**13.** Verfahren nach einem der vorhergehenden Ansprüche, wobei die Monomere M2.1 ausgewählt sind unter vinylaromatischen Monomeren und den Estern $\alpha,\beta$-ethylenisch ungesättigter $C_3$-$C_{10}$-Mono- und Dicarbonsäuren mit $C_1$-$C_{10}$-Alkanolen oder $C_3$-$C_{10}$-Cycloalkanolen.

**14.** Verfahren nach einem der vorhergehenden Ansprüche, wobei die Monomere M2 wenigstens ein Monomer M2.2 in einer Menge von 0,5 bis 40 Gew.%, bezogen auf die Gesamtmenge der Monomere M2, umfassen, das ausgewählt ist unter

- monoethylenisch ungesättigten Monomeren M2.2a, die wenigstens eine Säuregruppe oder wenigstens eine anionische Gruppe aufweisen;
- monoethylenisch ungesättigten, neutralen Monomeren M2.2b, die eine Wasserlöslichkeit von wenigstens 50 g/l bei 25 °C aufweisen; und
- monoethylenisch ungesättigten Monomeren M2.2c, die wenigstens eine kationische Gruppe und/oder wenigstens eine im Wässrigen protonierbare Gruppe aufweisen.

**15.** Verfahren nach einem der vorhergehenden Ansprüche, wobei der Wirkstoff ausgewählt ist unter Conazolfungiziden, Strobilurinen und Arylpyrrolen.

**16.** Wässrige Wirkstoffzusammensetzung, erhältlich nach einem Verfahren gemäß einem der vorhergehenden Ansprüche.

**17.** Wirkstoffzusammensetzung nach Anspruch 16, worin die Polymer/Wirkstoff-Partikel eine mittlere Teilchengröße, bestimmt durch Lichtstreuung, von nicht mehr als 1200 nm, aufweist.

**18.** Wirkstoffzusammensetzung nach Anspruch 16 oder 17, enthaltend den Wirkstoff in einer Menge von 0,5 bis 30 Gew.-%, bezogen auf das Gesamtgewicht der Zusammensetzung.

**19.** Wirkstoffzusammensetzung nach einem der Ansprüche 16 bis 18, enthaltend wenigstens einen Wirkstoff aus der

Gruppe der Insektizide, Akarizide, Algizide, Molluskizide, Biozide, Bakterizide, Herbizide, Pflanzenwachstumsregulatoren, und Fungizide.

**20.** Wirkstoffzusammensetzung nach Anspruch 19, enthaltend wenigstens einen fungiziden Wirkstoff.

**21.** Wirkstoffzusammensetzung nach Anspruch 19, enthaltend wenigstens einen insektiziden Wirkstoff.

**22.** Verwendung einer Wirkstoffzusammensetzung nach einem der Ansprüche 16 bis 21, enthaltend wenigstens einen Wirkstoff aus der Gruppe der Insektizide, Akarizide, Algizide, Biozide, Bakterizide und Fungizide, zum Schutz von Materialien vor einem Befall mit Schadorganismen und zur Behandlung von Materialien, die mit einem Schadorganismus befallen sind.

**23.** Verwendung einer Wirkstoffzusammensetzung nach einem der Ansprüche 20 oder 21 zum Schutz von Holz vor einem Befall mit holzschädigende Organismen.

**24.** Verwendung einer Wirkstoffzusammensetzung nach einem der Ansprüche 16 bis 21, enthaltend wenigstens einen Wirkstoff aus der Gruppe der Insektizide, Akarizide, Herbizide, Pflanzenwachstumsregulatoren und Fungizide im Pflanzenschutz.

## Claims

**1.** A process for preparing an aqueous active compound composition for the protection of crops or materials, which process comprises the following steps:

a) provision of an aqueous suspension of solid active compound particles of at least one active compound having a solubility in water of not more than 5 g/l at 25°C/1013 mbar, comprising, for stabilizing the active compound particles, at least one surfactant, where the active compound particles in the suspension have a mean particle size, determined by dynamic light scattering, of not more than 1200 nm,
b) emulsion polymerization of a first monomer composition M1 in the aqueous suspension of the active compound, where the monomer composition M1 comprises at least 95% by weight, based on its total weight, of at least one neutral, monoethylenically unsaturated monomer M1.1 having a solubility in water of not more than 30 g/l at 25°C/1 013 mbar, giving an aqueous dispersion of polymer/active compound particles, and
c) emulsion polymerization of a second monomer composition M2 in an aqueous dispersion of the polymer/active compound particles obtained in step b), where the monomer composition M2 comprises at least 60% by weight, based on its total weight, of at least one neutral, monoethylenically unsaturated monomer M2.1 having a solubility in water of not more than 30 g/l at 25°C/1013 mbar.

**2.** The process according to claim 1 where the active compound W is a solid at a temperature of 50°C.

**3.** The process according to claim 1 or 2 where the aqueous suspension of solid active compound particles comprises at least one nonionic surfactant.

**4.** The process according to claim 3 where the weight ratio of nonionic surfactant to active compound is in the range from 2:1 to 1:50.

**5.** The process according to any of the preceding claims, where the suspension of the solid active compound particles in step a) is provided by comminuting solid active compound in a mixture of the active compound with the surfactant and then dispersing the mixture obtained in this manner in an aqueous medium.

**6.** The process according to any of the preceding claims where the monomer composition M1 corresponds to a polymer 1 having a theoretical glass transition temperature according to Fox of at least 50°C.

**7.** The process according to any of the preceding claims where at least 70% by weight of the monomers M1.1 are selected from the group consisting of vinylaromatic monomers, esters of methacrylic acid with $C_2$-$C_4$-alkanols and tert-butyl acrylate.

**8.** The process according to any of the preceding claims where the weight ratio of active compound to the monomers

in the monomer composition M1 is in the range from 10:1 to 1:50.

**9.** The process according to any of the preceding claims where at least 70% by weight of the monomers M1 are initially charged in the aqueous suspension of the active compound and the polymerization is then initiated in the monomer/active compound emulsion obtained in this manner.

**10.** The process according to any of the preceding claims where the polymerization in step b) is carried out in the presence of an anionic emulsifier.

**11.** The process according to any of the preceding claims where the polymerization of the monomers M1 is initiated by a Redox initiator.

**12.** The process according to any of the preceding claims where the weight ratio of the total amount of monomer mixtures M1 and M2 to active compound is in the range from 1:9 to 100:1.

**13.** The process according to any of the preceding claims where the monomers M2.1 are selected from the group consisting of vinylaromatic monomers and the esters of $\alpha,\beta$-ethylenically unsaturated $C_3$-$C_{10}$-mono- and -dicarboxylic acids with $C_1$-$C_{10}$-alkanols or $C_3$-$C_{10}$-cycloalkanols.

**14.** The process according to any of the preceding claims where the monomers M2 comprise at least one monomer M2.2 in an amount of from 0.5 to 40% by weight, based on the total amount of the monomers M2, which monomer M2.2 is selected from the group consisting of

- monoethylenically unsaturated monomers M2.2a having at least one acid group or at least one anionic group;
- monoethylenically unsaturated neutral monomers M2.2b having a solubility in water of at least 50 g/l at 25°C; and
- monoethylenically unsaturated monomers M2.2c having at least one cationic group and/or at least one group which can be protonated in aqueous medium.

**15.** The process according to any of the preceding claims where the active compound is selected from the group consisting of conazole fungicides, strobilurins and arylpyrrols.

**16.** An aqueous active compound composition obtainable by a process according to any of the preceding claims.

**17.** The active compound composition according to claim 16 where the polymer/active compound particles have a mean particle size, determined by light scattering, of not more than 1200 nm.

**18.** The active compound composition according to claim 16 or 17 comprising the active compound in an amount of from 0.5 to 30% by weight, based on the total weight of the composition.

**19.** The active compound composition according to any of claims 16 to 18 comprising at least one active compound from the group of the insecticides, acaricides, algicides, molluscicides, biocides, bactericides, herbicides, plant growth regulators and fungicides.

**20.** The active compound composition according to claim 19 comprising at least one fungicidally active compound.

**21.** The active compound composition according to claim 19 comprising at least one insecticidally active compound.

**22.** The use of an active compound composition according to any of claims 16 to 21, comprising at least one active compound from the group consisting of insecticides, acaricides, algicides, biocides, bactericides and fungicides, for protecting materials against infestation by harmful organisms and for treating materials infested by a harmful organism.

**23.** The use of an active compound composition according to any of claims 20 or 21 for protecting wood against infestation by wood-damaging organisms.

**24.** The use of an active compound composition according to any of claims 16 to 21 comprising at least one active compound from the group of the insecticides, acaricides, herbicides, plant growth regulators and fungicides in crop protection.

## Revendications

1. Procédé de préparation d'une composition aqueuse de principes actifs pour la protection des plantes ou des matériaux, comprenant les étapes suivantes:

   a) préparation d'une suspension aqueuse de particules solides de principe actif d'au moins un principe actif ayant une solubilité à l'eau inférieure ou égale à 5 g/l à 25°C/1013 mbar, contenant, pour la stabilisation des particules de principe actif, au moins une substance tensioactive, les particules de principe actif dans la suspension présentant une grosseur de particule moyenne, déterminée par diffraction dynamique de la lumière, inférieure ou égale à 1200 nm,
   b) polymérisation en émulsion d'une première composition de monomères M1 dans la suspension aqueuse du principe actif, la composition de monomères M1 comprenant au moins 95 % en poids, par rapport à son poids total, d'au moins un monomère neutre monoéthyléniquement insaturé M1.1, ayant une solubilité à l'eau inférieure ou égale à 30 g/l à 25°C/1013 mbar, et on obtient une dispersion aqueuse de particules de polymère-principe actif, et
   c) polymérisation en émulsion d'une deuxième composition de monomères M2 dans une dispersion aqueuse des particules de principe actif de polymère obtenues à l'étape b), la composition de monomères M2 comprenant au moins 60 % en poids, par rapport à son poids total, d'au moins un monomère neutre monoéthyléniquement insaturé M2.1, ayant une solubilité à l'eau inférieure ou égale à 30 g/l à 25°C/1013 mbar.

2. Procédé selon la revendication 1, dans lequel le principe actif W à une température de 50°C est une matière solide.

3. Procédé selon la revendication 1 ou 2, dans lequel la suspension aqueuse des particules solides de principe actif comprend au moins une substance tensioactive non ionique.

4. Procédé selon la revendication 3, dans lequel le rapport pondéral de substance tensioactive non ionique à principe actif se situe dans l'intervalle compris entre 2:1 et 1:50.

5. Procédé selon l'une des revendications précédentes, dans lequel on procure la suspension des particules solides de principe actif à l'étape a) en broyant le principe actif solide dans un mélange du principe actif avec la substance tensioactive et en dispersant ensuite le mélange ainsi obtenu dans un milieu aqueux.

6. Procédé selon l'une des revendications précédentes, dans lequel la composition de monomères M1 correspond à un polymère 1 ayant une température de transition vitreuse théorique selon Fox d'au moins 50°C.

7. Procédé selon l'une des revendications précédentes, dans lequel au moins 70 % en poids des monomères M1.1 sont choisis parmi les monomères vinylaromatiques, les esters de l'acide méthacrylique avec des alcanols en $C_2$-$C_4$ et le t-butyl-acrylate.

8. Procédé selon l'une des revendications précédentes, dans lequel le rapport pondéral de principe actif à monomères dans la composition de monomères M1 se situe dans l'intervalle compris entre 10:1 et 1:50.

9. Procédé selon l'une des revendications précédentes, dans lequel on ajoute au moins 70 % en poids des monomères M1 dans la suspension aqueuse de principe actif et on initie ensuite la polymérisation dans l'émulsion de monomère/principe actif ainsi obtenue.

10. Procédé selon l'une des revendications précédentes, dans lequel la polymérisation à l'étape b) se fait en présence d'un émulsionnant anionique.

11. Procédé selon l'une des revendications précédentes, dans lequel on initie la polymérisation des monomères M1 par un initiateur redox.

12. Procédé selon l'une des revendications précédentes, dans lequel le rapport pondéral de quantité totale des mélanges de monomères M1 et M2 à principe actif se situe dans l'intervalle entre 1:9 et 100:1.

13. Procédé selon l'une des revendications précédentes, dans lequel les monomères M2.1 sont choisis parmi les monomères vinylaromatiques et les esters acides $\alpha,\beta$-mono- et dicarboxyliques en $C_3$-$C_{10}$ éthyléniquement insaturés avec des alcanols en $C_1$-$C_{10}$ ou des cycloalcanols en $C_3$-$C_{10}$.

**14.** Procédé selon l'une des revendications précédentes, dans lequel les monomères M2 comprennent au moins un monomère M2.2 dans une quantité de 0,5 à 40 % en poids, par rapport à la quantité totale des monomères M2, choisi parmi

- les monomères monoéthyléniquement insaturés M2.2a, qui présentent au moins un groupe acide ou au moins un groupe anionique;
- les monomères monoéthyléniquement insaturés neutres M2.2b, qui présentent une solubilité à l'eau d'au moins 50 g/l à 25°C, et
- les monomères monoéthyléniquement insaturés M2.2c, qui présentent au moins un groupe cationique et/ou au moins un groupe protonable en milieu aqueux.

**15.** Procédé selon l'une des revendications précédentes, dans lequel le principe actif est choisi parmi les fongicides conazole, les strobilurines et les arylpyrroles.

**16.** Composition aqueuse de principe actifs qu'on obtient d'après un procédé selon l'une des revendications précédentes.

**17.** Composition de principes actifs selon la revendication 16, dans laquelle la particule de polymère/principe actif présente une grosseur de particule moyenne, déterminée par diffraction de la lumière, inférieure ou égale à 1200 nm.

**18.** Composition de principes actifs selon la revendication 16 ou 17, contenant le principe actif dans une quantité de 0,5 à 30 % en poids, par rapport au poids total de la composition.

**19.** Composition de principes actifs selon l'une des revendications 16 à 18, contenant au moins un principe actif parmi le groupe des insecticides, des acaricides, des algicides, des molluscicides, des biocides, des bactéricides, des herbicides, des régulateurs de la croissance des plantes et des fongicides.

**20.** Composition de principes actifs selon la revendication 19, contenant au moins un principe actif fongicide.

**21.** Composition de principes actifs selon la revendication 19, contenant au moins un principe actif insecticide.

**22.** Utilisation d'une composition de principes actifs selon l'une des revendications 16 à 21, contenant au moins un principe actif parmi le groupe des insecticides, des acaricides, des algicides, des biocides, des bactéricides et des fongicides, pour la protection des matériaux contre une attaque par des organismes nuisibles et pour le traitement des matériaux attaqués par un organisme nuisible.

**23.** Utilisation d'une composition de principes actifs selon l'une des revendications 20 ou 21, pour la protection du bois contre une attaque par des organismes nuisant au bois.

**24.** Utilisation d'une composition de principes actifs selon l'une des revendications 16 à 21, contenant au moins un principe actif parmi le groupe des insecticides, des acaricides, des herbicides, des régulateurs de la croissance des plantes et des fongicides dans la protection des plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02082900 A
- WO 0245507 A
- WO 9965301 A
- US 3400093 A
- FR 1598644
- EP 1230855 A
- GB 831790 A
- WO 0062612 A
- EP 897904 A
- WO 03075663 A
- WO 9846608 A
- WO 9941255 A
- WO 03004465 A
- EP 462456 A
- DE 4435423 A
- DE 4419518 A
- DE 4435422 A
- EG 20322003


### In der Beschreibung aufgeführte Nicht-Patentliteratur


- **H. WIESE ; D. DISTLER.** Wässrige Polymerdispersionen. Wiley-VCH, 1999, 40
- **H. AUWETER ; D. HORN.** *J. Colloid Interf. Sci,* 1985, vol. 105, 399
- **D. LILGE ; D. HORN.** *Colloid Polym. Sci.,* 1991, vol. 269, 704
- **H. WIESE ; D. HORN.** *J. Chem. Phys.,* 1991, vol. 94, 6429
- Ullmanns Encyclopedia of Industrial Chemistry. Wiley VCH, 1997
- *AGROW,* 03. November 1995, 21
- **T.G. FOX.** *Bull. Am. Phys. Soc,* 1956, vol. II (1), 123
- Ullmanns Enzyklopädie der technischen Chemie. 1980, 17-18
- Ullmann's Encyclopedia of Industrial Chemistry. 1992, vol. 21, 169
- **J. BRANDRUP ; E.H. IMMERGUT.** Polymer Handbook. J. Wiley, 1989
- **ZOSEL.** *Farbe und Lack,* 1976, vol. 82, 125-134
- Emulsions. **R. HEUSCH.** Ullmanns Encylopedia of Industrial Chemistry. Wiley-VCH, 1997
- Ullmann's Encyclopedia of Industrial Chemistry, Wood preservation. Wiley VCH, 1997, vol. 5